(19) Europäisches Patentamt
European Patent Office
Office européen des brevets

(11) Veröffentlichungsnummer: **0 132 675**
**B1**

(12) **EUROPÄISCHE PATENTSCHRIFT**

(45) Veröffentlichungstag der Patentschrift: **07.12.88**

(51) Int. Cl.⁴: **C 08 G 18/24**, C 08 G 18/18, C 08 G 18/70, C 08 G 18/71, C 08 G 18/10

(21) Anmeldenummer: **84107996.5**

(22) Anmeldetag: **09.07.84**

(54) **Reversibel blockierte Katalysatoren enthaltende Polyisocyanat-Zubereitungen, ein Verfahren zu ihrer Herstellung, ihre Verwendung zur Herstellung von Polyurethankunststoffen, sowie Anlagerungsprodukte von Sulfonylisocyanaten an Katalysatoren mit Zinn(II)- bzw. Zinn(IV)-carboxylat-Struktur.**

(30) Priorität: **22.07.83 DE 3326566**

(43) Veröffentlichungstag der Anmeldung: **13.02.85 Patentblatt 85/7**

(45) Bekanntmachung des Hinweises auf die Patenterteilung: **07.12.88 Patentblatt 88/49**

(84) Benannte Vertragsstaaten: **AT BE DE FR GB IT NL**

(56) Entgegenhaltungen:
**DE-A- 2 226 525**
**US-A- 3 480 656**

**CHEMISCHE BERICHTE, Jahrgang 110, 1977, Seiten 2368-2373, Verlag Chemie, GmbH, Weinheim; R. APPEL et al.: "Additionsreaktionen von N,N-Dialkylsulfamiden, tertiären Aminen und Phosphinen mit Fluorsulfonylisocyanat"**

(73) Patentinhaber: **BAYER AG, Konzernverwaltung RP Patentabteilung, D-5090 Leverkusen 1 Bayerwerk (DE)**

(72) Erfinder: **Richter, Roland, Dr., Roggendorfstrasse 53, D-5000 Koeln 80 (DE)**
Erfinder: **Müller, Hanns Peter, Dr., Im Kerberich 6, D-5068 Odenthal (DE)**
Erfinder: **Hombach, Rudolf, Dr., Johann-Janssen-Strasse 24, D-5090 Leverkusen (DE)**
Erfinder: **Dollhausen, Manfred, Dr., Herzogenfeld 21, D-5068 Odenthal (DE)**
Erfinder: **Avar, Geza, Dr., Bamberger Strasse 1, D-5090 Leverkusen 1 (DE)**
Erfinder: **Freitag, Hans-Albrecht, Dr., Muelheimer Strasse 135, D-5060 Bergisch-Gladbach 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft neue Polyisocyanat-Zubereitungen, welche in gelöster oder dispergierter Form bestimmte, nachstehend näher beschriebene, reversibel blockierte Katalysatoren für die Isocyanat-Additionsreaktion enthalten, die erst unter dem Einfluss von Verbindungen mit gegenüber Isocyanatgruppen reaktionsfähigen Gruppen ihre katalytische Wirksamkeit entfalten, ein Verfahren zur Herstellung der neuen Polyisocyanat-Zubereitungen, ihre Verwendung als Reaktionspartner für Verbindungen mit gegenüber Isocyanatgruppen reaktionsfähigen Gruppen bei der Herstellung von Polyurethankunststoffen, sowie zur Herstellung der Zubereitungen geeignete latente Zinn-Katalysatoren.

In der technischen Polyurethanchemie, z.B. bei der Herstellung von Polyurethanschaumstoffen, -elastomeren, -lacken oder -klebstoffen spielt die Katalyse der Isocyanat-Additionsreaktionen eine wichtige Rolle. Eine Übersicht über die gebräuchlichen Katalysatoren und deren Wirkungsmechanismus findet sich bei A. Farkas und G.A. Mills, Advan. Catalysis, 13, 393 (1962), J.H. Saunders und K.C. Frisch, Polyurethanes, Part I, Wiley-Interscience, New York, 1962, Chap. VI und K.C. Frisch und L.P. Rumao, J. Macromol. Sci.-Revs. Macromol. Chem., C5(1), 103–150 (1970).

Bei der Herstellung von Polyurethankunststoffen finden die verschiedensten Katalysatoren bzw. Katalysatorkombinationen Verwendung. Technisch am häufigsten eingesetzt werden tert. Amine und Metall-Katalysatoren, speziell Zinnsalze organischer Carbonsäuren. Letztere sind hochaktiv für die Urethanisierungsreaktion, d.h. sie bewirken eine schnelle und quantitative Umsetzung der Isocyanatgruppe mit der Hydroxylgruppe des Polyethers oder Polyesters. Die tert. Amine dagegen katalysieren sowohl die Urethanisierungsreaktion als auch bevorzugt die Isocyanat-Wasser-Reaktion, die z.B. für die schnelle Aus- bzw. Durchhärtung von NCO-Prepolymeren (Einkomponentensysteme im Oberflächenschutz oder Klebstoffsektor) bzw. für die Kohlendioxid-Entwicklung im Schaum verantwortlich ist.

Der Nachteil der gängigen Katalysatoren besteht darin, dass man sie in der für eine wirksame Katalyse erforderlichen Konzentration erst beim Verarbeitungsschritt mit der Isocyanatkomponente vermischen kann, da solche Gemische nicht lagerstabil sind. Polyisocyanate, insbesondere Prepolymere mit endständigen Isocyanatgruppen, neigen nämlich bei der Lagerung unter dem Einfluss von Licht, Luftsauerstoff und/oder von Feuchtigkeit zur Verfärbung, Bildung von Umsetzungsprodukten höherer Viskosität und/oder zur Bildung von kristallinen Ausfällungen. Diese unerwünschten Erscheinungen werden durch die üblichen Katalysatoren so stark beschleunigt, dass derartige Katalysatoren enthaltende Polyisocyanate als instabil bezeichnet werden müssen.

Es war daher die Aufgabe der vorliegenden Erfindung, die gebräuchlichen technischen Polyurethan-Katalysatoren, insbesondere die tert. Amine und Zinn-carboxylate, chemisch so zu derivatisieren, dass sie in einer inaktiven Form vorliegen, in der sie in Polyisocyanaten, insbesondere Isocyanat-Prepolymeren, gelöst bzw. dispergiert werden können, ohne deren Lagerstabilität zu beeinflussen und aus der sie aber beim Verarbeitungsschritt spontan wieder freigesetzt werden.

Diese Aufgabe konnte durch die Bereitstellung der nachstehend näher beschriebenen erfindungsgemässen Polyisocyanat-Zubereitungen und das zu ihrer Herstellung geeignete erfindungsgemässe Verfahren gelöst werden.

Gegenstand der vorliegenden Erfindung sind reversibel blockierte Katalysatoren für die Isocyanat-Additionsreaktion enthaltende Polyisocyanat-Zubereitungen, dadurch gekennzeichnet, dass sie aus

a) mindestens einem organischen Polyisocyanat,
b) mindestens einem, in der Polyisocyanat-Zubereitung gelöst oder dispergiert vorliegenden Anlagerungsprodukt eines Sulfonylisocyanats an ein tert. Amin und/oder an einen Katalysator mit Zinn(II)- bzw. Zinn(IV)-carboxylat-Struktur als reversibel blockiertem Katalysator, sowie gegebenenfalls
c) aus der Polyurethanchemie an sich bekannten Hilfs- und Zusatzmitteln

bestehen.

Gegenstand der vorliegenden Erfindung ist auch ein Verfahren zur Herstellung dieser Polyisocyanat-Zubereitungen, welches dadurch gekennzeichnet ist, dass man bei 0 bis 80 °C (i) mindestens ein mindestens eine tert. Aminogruppe aufweisendes Amin und/oder (ii) mindestens eine Verbindung mit Zinn(II)- bzw. Zinn(IV)-carboxylat-Struktur mit einer, bezogen auf die tert. Aminogruppen bzw. die Carboxylatanionen einerseits und die Isocyanatosulfonyl-Gruppen des Sulfonylisocyanats andererseits, mindestens äquimolaren Menge eines Sulfonylisocyanats zu einem Anlagerungsprodukt b) umsetzt, wobei die Umsetzung entweder in der Gesamtmenge der gegebenenfalls in einem Hilfslösungsmittel gelösten Polyisocyanat-Komponente a) als Reaktionsmedium oder wobei die Umsetzung in Abwesenheit oder nur in einem Teil der gegebenenfalls in einem Hilfslösungsmittel gelösten Polyisocyanat-Komponente a) gegebenenfalls unter Mitverwendung eines Hilfslösungsmittels unter anschliessender Durchmischung mit der Gesamtmenge bzw. der Restmenge der gegebenenfalls in einem Hilfslösungsmittel gelösten Polyisocyanat-Komponente a) erfolgt, und wobei gegebenenfalls (weitere) Hilfs- und Zusatzmittel c) der Komponente a) vor der Herstellung der Mischung mit der Komponente b) oder der Mischung aus a) und b) hinzugefügt werden.

Gegenstand der Erfindung ist auch die Verwendung der neuen Polyisocyanat-Zubereitungen als Reaktionspartner für Verbindungen mit gegenüber Isocyanatgruppen reaktionsfähigen Gruppen bei der Herstellung von Polyurethankunststoffen nach dem Ein- oder Zweikomponenten-Prinzip.

Gegenstand der Erfindung sind auch die zur Herstellung der erfindungsgemässen Zubereitungen geeigneten latente Polyurethankatalysatoren, die dadurch gekennzeichnet sind, dass sie als Anlagerungsprodukte eines Sulfonylisocyanats an einen Katalysator mit Zinn(II)- bzw. Zinn(IV)-Carboxylat-Struktur in einem Mol-Verhältnis von Isocyanato-Sulfonyl-Gruppen zu Carboxylatanionen von 1:1 darstellen.

Die Komponente a) der erfindungsgemässen Zubereitungen besteht aus mindestens einem organischen Polyisocyanat, d.h. aus beliebigen Verbindungen bzw. Gemischen von Verbindungen, die pro Molekül mindestens zwei organisch gebundene Isocyanatgruppen aufweisen. Hierzu gehören sowohl niedermolekulare Polyisocyanate mit einem unter 400 liegenden Molekulargewicht als auch Modifizierungsprodukte derartiger niedermolekularer Polyisocyanate mit einem aus der Funktionalität und dem Gehalt an funktionellen Gruppen berechenbaren, zwischen 400 und 10 000, vorzugsweise 600 bis 8000 und insbesondere 800 bis 5000 liegenden Molekulargewicht. Geeignete niedermolekulare Polyisocyanate sind beispielsweise solche der Formel

$$Q\ (NCO)_{n'}$$

in der

n = 2–4, vorzugsweise 2,

und

Q einen aliphatischen Kohlenwasserstoffrest mit 2–18, vorzugsweise 6–10 C-Atomen,

einen cycloaliphatischen Kohlenwasserstoffrest mit 4–15, vorzugsweise 5–10 C-Atomen,

einen aromatischen Kohlenwasserstoffrest mit 6–15, vorzugsweise 6–13 C-Atomen,

oder einen aliphatischen Kohlenwasserstoffrest mit 8–15, vorzugsweise 8–13 C-Atomen,

bedeuten.

Geeignete derartige niedermolekulare Polyisocyanate sind z.B.

Hexamethylendiisocyanat,
1,12-Dodecandiisocyanat,
Cyclobutan-1,3-diisocyanat,
Cyclohexan-1,3- und 1,4-diisocyanat
sowie beliebige Gemische dieser Isomeren,
1-Isocyanato-3,3,5-trimethyl-5-isocyanato-methylcyclohexan,
2,4- und 2,6-Hexahydrotoluylendiisocyanat
sowie beliebige Gemische dieser Isomeren,
Hexahydro-1,3- und/oder -1,4-phenylendiisocyanat,
Perhydro-2,4'- und/oder -4,4'-diphenylmethan-diisocyanat,
1,3- und 1,4-Phenylendiisocyanat,
2,4- und 2,6-Toluylendiisocyanat
sowie beliebige Gemische dieser Isomeren,
Diphenylmethan-2,4'- und/oder -4,4'-diisocyanat,
Naphthylen-1,5-diisocyanat,
Triphenylmethan-4,4',4''-triisocyanat
oder Polyphenyl-polymethylenpolyiisocyanate, wie sie durch Anilin-Formaldehyd-Kondensation und anschliessende Phosgenierung erhalten werden.

Geeignete höhermolekulare Polyisocyanate sind Modifizierungsprodukte derartiger einfacher Polyisocyanate, d.h. Polyisocyanate mit z.B. Isocyanurat-, Carbodiimid-, Allophanat-, Biuret- oder Uretdion-Struktureinheiten, wie sie nach an sich bekannten Verfahren des Standes der Technik aus den beispielhaft genannten einfachen Polyisocyanaten der oben genannten allgemeinen Formel hergestellt werden können. Unter den höhermolekularen, modifizierten Polyiisocyanaten sind insbesondere die aus der Polyurethanchemie bekannten Prepolymeren mit endständigen Isocyanatgruppen des Molekulargewichtsbereichs 400 bis 10 000, vorzugsweise 600 bis 8000 und insbesondere 800 bis 5000 von Interesse. Diese Verbindungen werden in an sich bekannter Weise durch Umsetzung von überschüssigen Mengen an einfachen Polyisocyanaten der beispielhaft genannten Art mit, keine tert. Stickstoffatome aufweisenden, organischen Verbindungen mit mindestens zwei gegenüber Isocyanatgruppen reaktionsfähigen Gruppen, insbesondere organischen Polyhydroxylverbindungen, die keine tert. Stickstoffatome aufweisen, hergestellt. Geeignete derartige Polyhydroxylverbindungen sind sowohl einfache mehrwertige Alkohole wie z.B. Ethylenglykol, Trimethylolpropan, Propandiol-1,2 oder Butandiol-1,2, insbesondere jedoch höhermolekulare Polyetherpolyole und/oder Polyesterpolyole der aus der Polyurethanchemie an sich bekannten Art mit Molekulargewichten von 600 bis 8000, vorzugsweise 800 bis 4000, die mindestens zwei, in der Regel 2 bis 8, vorzugsweise aber 2 bis 4 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind. Zur Herstellung der NCO-Prepolymeren geeignete Verbindungen mit gegenüber Isocyanatgruppen reaktionsfähigen Gruppen, insbesondere Hydroxylgruppen, sind beispielsweise die in US-PS 4 218 543, Kolonne 7, Zeile 29 bis Kolonne 9, Zeile 25 beispielhaft offenbarten Verbindungen, die keine tert. Stickstoffatome aufweisen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO/OH-Äquivalentverhältnisses von $>1$ zur Umsetzung gebracht. Die NCO-Prepolymeren weisen im allgemeinen einen NCO-Gehalt von 2,5 bis 15, vorzugsweise 6 bis 20 Gew.-% auf. Hieraus geht bereits hervor, dass im Rahmen der vorliegenden Erfindung unter «NCO-Prepolymeren» bzw. unter «Prepolymeren mit endständigen Isocyanatgruppen» sowohl die Umsetzungsprodukte als solche als auch ihre Gemische mit überschüssigen Mengen an nichtumgesetzten Ausgangspolyisocyanaten, die oft auch als «Semiprepolymere» bezeichnet werden, zu versehen sind.

Für das erfindungsgemässe Verfahren besonders bevorzugte Polyisocyanatkomponenten a) sind die in der Polyurethanchemie üblichen technischen Polyisocyanate, d.h.
Hexamethylendiisocyanat,
1-Isocyanato-3,3,5-trimethyl-5-isocyanatomethyl-cyclohexam (Isophorondiisocyanat,, abgekürzt: IPDI), 4,4'-Diisocyanato-dicyclohexylmethan, 2,4-Diisocyanatotoluol, dessen technische Gemische mit
2,6-Diisocyanatotoluol,
4,4'-Diisocyanatodiphenylmethan,
dessen Gemische mit den entsprechenden 2,4'- und 2,2'-Isomeren, Polyisocyanatgemische der Diphenylmethanreihe wie sie durch Phosgenierung von Anilin/Formaldehyd-Kondensaten in an sich bekannter Weise gewonnen werden können, die Biuret- oder Isocyanatgruppen aufweisenden Modifizierungsprodukte dieser technischen Polyisocyanate und insbesondere NCO-Prepolymere der genannten Art auf Basis dieser technischen Polyisocyanate einerseits und den beispielhaft genannten einfachen Polyolen und/oder Polyetherpolyolen und/oder Polyesterpolyolen anderseits, sowie beliebige Gemische derartiger Polyisocyanate.

Bei der Komponente b) der erfindungsgemässen Polyisocyanat-Zubereitungen handelt es sich um Anlagerungsprodukte (Komplexe) von Sulfonylisocyanaten an beliebige tert. Amine und/oder an Zinnkatalysatoren mit Zinn(II)- oder Zinn(IV)-Struktureinheiten.

Erfindungsgemäss geeignete Sulfonylisocyanate sind beliebige anorganische oder organische Verbindungen, die mindestens eine Struktureinheit der Formel

$$-SO_2-NCO$$

aufweisen. Vorzugsweise werden organische Sulfonylisocyanate, besonders bevorzugt solche mit aromatisch gebundenen Isocyanatosulfonylresten eingesetzt. Verfahren zur Herstellung von organischen Sulfonylisocyanaten der erfindungsgemäss geeigneten Art, sowie ihr chemisches Verhalten werden zusammenfassend dargestellt von H. Ulrich in Chem. Rev. 65, Seite 369–376, 1965. Des weiteren ist die Herstellung von Arylsulfonylisocyanaten beschrieben in den US-PS 2 666 787 und 3 484 466. Erfindungsgemäss können sowohl aliphatische, cycloaliphatische als auch aromatische Mono- oder Polysulfonylisocyanate eingesetzt werden. Als Beispiele seien genannt:
Methylsulfonylisocyanat,
Butylsulfonylisocyanat,
Cyclohexylsulfonylisocyanat,
Perfluoroctylsulfonylisocyanat,
Phenylsulfonylisocyanat,
p-Toluolsulfonylisocyanat,
Benzylsulfonylisocyanat,
p-Chlorphenylsulfonylisocyanat,
m-Nitrophenylsulfonylisocyanat,
2,5-Dimethylphenylsulfonylisocyanat,
p-Fluorphenylsulfonylisocyanat,
2,5-Dichlorphenylsulfonylisocyanat,
3,4-Dichlorphenylsulfonylisocyanat,
p-Bromphenylsulfonylisocyanat,
p-Methoxyphenylsulfonylisocyanat,
p-Nitrophenylsulfonylisocyanat
und o-Nitrophenylsulfonylisocyanat;
m-Phenylendisulfonyldiisocyanat,
p-Phenylendisulfonyldiisocyanat,
4-Methyl-m-phenylendisulfonyldiisocyanat,
2-Chlor-p-phenylendisulfonyldiisocyanat,
5-Chlor-m-phenylendisulfonyldiisocyanat,
1,5-Naphthylendisulfonyldiisocyanat,
3-Nitro-p-phenylendisulfonyldiisocyanat,
4-Methoxy-m-phenylendisulfonyldiisocyanat,
2,5-Furandiylbis-(methylensulfonyl)-diisocyanat,
4,4'-Biphenylendisulfonyldiisocyanat,
2,2'-Dichlor-4,4'-biphenylylendisulfonyldiisocyanat,
3,3'-Dimethoxy-4,4'-biphenylylendisulfonyldiisocyanat,
(Methylendi-p-phenylen)disulfonyldiisocyanat,
(Methylendi-3,3'-dimethoxy-p-phenylylen)-disulfonyldiisocyanat,
(Methylendi-3,3'-dimethyl-p-phenylylen)-disulfonyldiisocyanat und
2-Methyl-p-phenylendisulfonyldiisocyanat;
des weiteren Sulfonylisocyanate mit freien NCO-Gruppen wie
m-Isocyanatophenylsulfonylisocyanat,
p-Isocyanatophenylsulfonylisocyanat,
3-Isocyanato-p-tolylsulfonylisocyanat,
5-Isocyanato-o-tolylsulfonylisocyanat,
3-Isocyanato-4-methoxyphenylsulfonylisocyanat,
4-Isocyanato-3-chlorphenylsulfonylisocyanat,
4'-Isocyanato-4-biphenylylsulfonylisicyanat,
4'-Isocyanato-2,2'-dichloro-4-biphenylylsulfonylisocyanat,
4'-Isocyanato-3,3'-dimethoxy-4-biphenylylsulfonylisocyanat,
α-(p-Isocyanatophenyl)-p-tolylsulfonylisocyanat,
α-(4-Isocyanato-3-methoxyphenyl)-2-methoxy-p-tolylsulfonylisocyanat,
α-(4-Isocyanato-m-tolyl)-2,4-xylylsulfonylisocyanat und
5-Isocyanato-1-naphthylsulfonylisocyanat;
oder mit freien Isothiocyanat-Gruppen wie
p-Isothiocyanatophenylsulfonylisocyanat,
m-Isothiocyanatophenylsulfonylisocyanat,
Isothiocyanato-4-methoxylphenylsulfonylisocyanat und
4-Isothiocyanato-3-methylphenylsulfonylisocyanat.

Bevorzugte Verwendung finden Sulfonylisocyanate, deren $-SO_2-NCO$-Gruppe direkt an einem aromatischen Rest gebunden ist; ganz bevorzugt sind Phenylsulfonylisocyanat, p-Chlorphenylsulfonylisocyanat und p-Toluolsulfonylisocyanat (Tosylisocyanat). Oft empfiehlt sich auch die Verwendung von solchen Sulfonylisocyanaten der beispielhaft genannten Art, welche entweder mindestens zwei Isocyanatosulfonyl-Struktureinheiten oder neben einer Isocyanatosulfonyl-Struktureinheit-

heit weitere Isocyanatgruppen aufweisen, da derartige polyfunktionelle Verbindungen bei der erfindungsgemässen verwendung der erfindungsgemässen Polyisocyanat-Zubereitungen, beispielsweise in Kombination mit organischen Polyhydroxylverbindungen, in das resultierende Polyurethangerüst ohne Kettenabbruch eingebaut werden.

Neben den beispielhaft genannten organischen Sulfonylisocyanaten kommen erfindungsgemäss auch anorganische Sulfonylisocyanate wie z.B. Chlorsulfonylisocyanat oder Sulfonyldiisocyanat, deren Herstellung beispielsweise in DE-PS 928 896 bzw. in DE-PS 1 152 023 beschrieben ist, in Betracht.

Für die Herstellung der Komponente b) geeignete tert. Amine bzw. Zinnverbindungen sind alle beliebigen aus der Polyurethanchemie an sich bekannten Katalysatoren, die entweder mindestens eine tert. Aminogruppe oder mindestens eine Zinn(II)- bzw. Zinn(IV)-Carboxylat-Struktureinheit aufweisen. Vorzugsweise werden solche tert. Amine bzw. Zinncarboxylate eingesetzt, die keine Hydroxyl- oder primäre bzw. sekundäre Aminogruppe aufweisen, da derartige Reaktivgruppen mit dem Sulfonylisocyanat zu Urethan oder Harnstoff abreagieren und dann erst mit weiterem Sulfonylisocyanat durch Umsetzug mit dem tert. Stickstoff bzw. dem Carboxylatanion die erfindungswesentlichen Addukte bilden können, die dann bei Zutritt von H-aciden Verbindungen wie Wasser oder Hydroxylverbindungen nicht mehr den ursprünglichen Katalysator freisetzen, sondern das entsprechend derivatisierte Produkt. Da dieses aber durchaus noch katalytische Wirkung aufweisen kann, ist die Verwendung von Katalysatoren, die neben einem tert. Stickstoffatom bzw. neben der Zinncarboxylat-Struktur noch freie OH- oder aminische NH-Gruppen aufweisen, zwar weniger bevorzugt, jedoch auch nicht völlig ausgeschlossen. Im übrigen können die erfindungsgemäss geeigneten tert. Amine bzw. Zinnverbindungen selbstverständlich beliebige, unter den Bedingungen des erfindungsgemässen Verfahrens inerte, und die erfindungsgemässe Verwendung der Polyisocyanat-Zubereitungen nicht störende, Heteroatome enthaltende Struktureinheiten aufweisen.

Die erfindungsgemäss geeigneten tert. Amine weisen im allgemeinen ein zwischen 101 und 6000 liegendes Molekulargewicht auf. Es handelt sich bei diesen tert. Aminen entweder um Isocyanatgruppen-freie tert. Amine des Molekulargewichtsbereichs 101 bis 600, vorzugsweise 101 bis 300, oder um Isocyanatgruppen aufweisende tert. Amine des Molekulargewichtsbereichs 400 bis 6000, vorzugsweise 500 bis 4500.

Beispiele geeigneter, Isocyanatgruppen-freier tert. Amine sind Triethylamin, Tributylamin, N-Methyl-morpholin, n-Ethyl-morpholin, N,N,N',N'-Tetramethyl-ethylendiamin, Pentamethyl-diethylentriamin und höhere Homologe (DE-OS 2 624 527 und DE-OS 2 624 528),
1,4-Diazabicyclo-(2,2,2)-octan,
N-Methyl-N'-dimethylaminoethylpiperazin,
Bis-(dimethylaminoalkyl)-piperazine (DE-OS 2 636 787),
N,N-Dimethylbenzylamin,
N,N-Dimethylcyclohexylamin,
N,N-Diethylbenzylamin,
Bis-(N,N-diethylaminoethyl)-adipat,
N,N,N',N'-Tetramethyl-1,3-butandiamin,
N,N-Dimethyl-β-phenylethylamin,
1,2-Dimethylimidazol,
2-Methylimidazol,
monocyclische und bicyclische Amidine (DE-OS 1 720 633), Bis-(dialkylamino)alkyl-ether (US-PS 3 330 782, DE-AS 1 030 558, DE-OS 1 804 361 und DE-OS 2 618 280), Amidgruppen (vorzugsweise Formamidgruppen) aufweisende tert. Amine gemäss der DE-OS 2 523 633 und DE-OS 232 292), Pyridin, Aminopyridine wie
4-Dimethylaminopyridin,
N,N',N''-Tris(dimethylaminopropyl)-s-hexahydrotriazin,
N,N-Diethylcyclohexylamin,
N,N,N',N'-Tetramethylmethandiamin,
2,2'-Sulfobis(N,N-dimethylethylamin),
Bis[2(3'-N,N-dimethylaminopropoxy)-ethyl]ether
und N-(3-Dimethylaminopropyl)-morpholin.
Ferner seien genannt Silaamine mit Kohlenstoff-Silicium-Bindungen, wie sie z.B. in der DE-PS 1 229 290 beschrieben sind, z.B. 2,2,4-Trimethyl-2-silamorpholin und 1,3-Diethylaminomethyl-tetramethyl-disiloxan.

Beispiele geeigneter, Isocyanatgruppen aufweisender tert. Amine sind insbesondere tert. Aminstickstoffatome aufweisende NCO-Prepolymere, die durch Umsetzung von mehrwertigen, tert. Stickstoffatome aufweisenden Alkoholen mit überschüssigen Mengen an einfachen Polyisocyanaten der oben beispielhaft genannten Art in an sich bekannter Weise zugänglich sind. Bei den tert. Stickstoffatome aufweisenden mehrwertigen Alkoholen kann es sich sowohl um Ethergruppenfreie tert. Aminoalkohole des Molekulargewichtsbereichs 119 bis 400, wie beispielsweise N-Methyl-diethanolamin, N-Ethyl-dipropanolamin, N-Stearyldiethanolamin oder um Ethergruppen aufweisende Aminoalkohole des Molekulargewichtsbereichs 207 bis 5700, vorzugsweise 300 bis 4200 handeln, wie sie in an sich bekannter Weise durch Alkoxylierung von Aminstickstoff aufweisenden Startermolekülen wie z.B. Ethanolamin, Propanolamin, Diethanolamin, Triethanolamin, Dipropanolamin, Tripropanolamin, Ethylamin, 1,2-Diaminoethan oder 1,6-Diaminohexan unter Verwendung von Propylenoxid und/oder Ethylenoxid zugänglich sind.

Als erfindungsgemäss bevorzugte organische Zinnsalze seien beispielsweise genannt:

Zinn(II)-salze von Carbonsäuren wie Zinn(II)-acetat, Zinn(II)-octoat, Zinn(II)-ethylhexoat, Zinn-(II)-oleat und Zinn(II)-laurat sowie Zinn(IV)-Verbindungen wie Dibutylzinndiacetat, Dibutylzinndilaurat, Dibutylzinnmaleat, Dioctylzinndiacetat, Dibutylzinndi-2-ethyl-hexoat, Tributylzinnacetat oder Tetrabutyldiacetoxydistannoxan.

Die Katalysatoren können einzeln oder in beliebigen Kombinationen eingesetzt werden, wobei

die Kombination eines Zinnsalzes mit einem tert. Amin oft bevorzugt ist, da hierbei häufig Synergismus bezüglich der katalytischen Aktivität beobachtet wird.

Die Herstellung der Anlagerungsprodukte der Sulfonylisocyanate an die beispielhaft genannten Katalysatoren erfolgt wie weiter unten bei der Schilderung des erfindungsgemässen Verfahrens beschrieben.

Bei den gegebenenfalls in den erfindungsgemässen Polyisocyanat-Zubereitungen vorliegenden Hilfs- und Zusatzmitteln c) handelt es sich um solche der aus der Polyurethanchemie an sich bekannten Art.

So können beispielsweise in den erfindungsgemässen Polyisocyanat-Zubereitungen die bei der Herstellung von Polyurethanschaumstoffen oft mitverwendeten organischen Treibmittel wie z.B. Methylenchlorid, Chloroform, Ethylidenchlorid, Vinylidenchlorid, Monofluortrichlormethan, Chlordifluormethan, Dichlordifluormethan, Butan, Hexan, Heptan oder Diethylether vorliegen. Des weiteren ist es möglich, den erfindungsgemässen Zubereitungen gegenüber Isocyanatgruppen inerte Formtrennmittel einzuverleiben, wie sie bei der Herstellung von selbsttrennenden Formkunststoffen auf Polyurethanbasis eingesetzt werden. Bevorzugte Zusatzmittel c) sind jedoch insbesondere die aus der Klebstoff- und Lacktechnologie bekannten Zusatzmittel, z.B. Lösungsmittel wie Toluol, Xylol, Ethylacetat, Butylacetat, Methyl-ethylketon, Methyl-isobutyl-keton, Ethylenglykolmonoethylether-acetat, Ethylenglykol-monoethylether-acetat oder beliebige Gemische derartiger Lösungsmittel. Die Mitverwendung dieser Lösungsmittel erfolgt insbesondere bei der Verwendung der erfindungsgemässen Polyisocyanat-Zubereitungen auf Basis von NCO-Prepolymeren als unter dem Einfluss von Luftfeuchtigkeit selbst härtenden Einkomponenten-Klebstoffen bzw. -Lacken. Des weiteren ist es möglich, den erfindungsgemässen Polyisocyanat-Zubereitungen beispielsweise weitere aus der Lacktechnologie bekannte Hilfs- und Zusatzmittel einzuverleiben, wie z.B. Pigmente, Füllstoffe und Verlaufshilfsmittel.

Die Durchführung des erfindungsgemässen Verfahrens zur Herstellung der erfindungsgemässen Polyisocyanat-Zubereitungen kann nach mehreren Varianten erfolgen. In allen diesen Varianten erfolgt jedoch die Bildung der Anlagerungsprodukte der Sulfonylisocyanate an die beispielshaft genannten Katalysatoren innerhalb des Temperaturbereichs von 0 bis 80 °C, insbesondere 10 bis 30 °C unter Verwendung solcher Mengen der beiden Komponenten der Anlagerungsprodukte, dass auf jede Aminogruppe der tert. Amine bzw. jedes Carboxylatanion der Zinnsalze mindestens eine Isocyanato-sulfonyl-Gruppe der Sulfonylisocyanate entfällt. Die Verwendung eines Unterschusses an Sulfonylisocyanat ist, wie leicht einzusehen, wenig zweckmässig, da hierdurch nur eine teilweise Blockierung der Katalysatoren erreicht würde.

Das erfindungsgemässe Verfahren wird im Falle der Verwendung von Isocyanatgruppen-freien tert.-Aminen vorteilhaft wie folgt durchgeführt:

Das tert. Amin wird in der Gesamtmenge der Polyisocyanat-Komponente a) aufgelöst, worauf sich die Zugabe des Sulfonylisocyanats unter Rühren anschliesst. Dabei können sowohl das tert. Amin als auch das Sulfonylisocyanat als auch die Polyisocyanat-Komponente a) in einem inerten Lösungsmittel der beispielhaft genannten Art gelöst sein. Das gegebenenfalls mitverwendete Lösungsmittel kann im Anschluss an die erfindungsgemässe Umsetzung zwischen tert. Amin und Sulfonylisocyanat gewünschtenfalls destillativ entfernt werden. Die genannte Umsetzung kann selbstverständlich ebenso gut auch unter Verwendung nur eines Teils der Polyisocyanat-Komponente a) als Reaktionsmedium durchgeführt werden. In einem solchen Fall würde das Reaktionsgemisch im Anschluss an die Umsetzung (Bildung der Anlagerungsverbindung) mit der Restmenge der Polyisocyanat-Komponente a) abgemischt werden. Hierbei können selbstverständlich unterschiedliche Polyisocyanate der oben beispielhaft genannten Art zum Einsatz gelangen. In einer weniger bevorzugten Variante kann man auch das Sulfonylisocyanat in der Polyisocyanat-Komponente a) oder in einem Teil der Polyisocyanat-Komponente a) bzw. deren Lösung in einem inerten Lösungsmittel der beispielhaft genannten Art vorlegen und dann das tert. Amin in die so erhaltene Lösung einrühren. Hierbei fallen jedoch häufig die erfindungswesentlichen Anlagerungsverbindungen b) aus, während nach der bevorzugten, erstgenannten Verfahrensvariante die gleichen Addukte in Lösung bleiben.

In einer weiteren weniger bevorzugten Verfahrensvariante kann man die Anlagerungsverbindung z.B. in einem inerten Lösungsmittel durch Kombination der Einzelkomponenten herstellen und die so erhaltene Lösung bzw. Dispersion der Anlagerungsverbindung b) der Polyisocyanat-Komponente a) einverleiben. Auch gemäss dieser, weniger bevorzugten Verfahrensvariante entstehen häufig sedimentierende Dispersionen der Anlagerungsverbindungen b), deren Sedimente durch einfaches Aufrühren leicht redispergierbar sind. Selbstverständlich sind stabile Lösungen der Anlagerungsverbindungen b) gegenüber den Dispersionen bevorzugt. Die überraschende Beobachtung, dass bei der erstgenannten bevorzugten Variante des erfindungsgemässen Verfahrens derartige stabile Lösungen entstehen, kann evtl. damit erklärt werden, dass sich bei der genannten Herstellung der Polyisocyanat-Zubereitungen in situ Isocyanatgruppen der Polyisocyanat-Komponente a) an die Anlagerungsverbindung b), die vermutlich als Betain vorliegt, anlagern und so die überraschende gute Löslichkeit der in situ hergestellten Anlagerungsverbindungen b) bewirken.

Im Falle der Verwendung von tert.-Stickstoffatomen aufweisenden NCO-Prepolymeren erfolgt die Durchführung des erfindungsgemässen Verfahrens entweder dergestalt, dass man die tert.-Stickstoffatome aufweisenden NCO-Prepolymeren vorab der erfindungsgemässen Behandlung mit dem Sulfonylisocyanat unterzieht oder vorzugsweise dergestalt, dass man zunächst ein Gemisch aus der Polyisocyanatkomponente a) und dem tert.-Stickstoffatome aufweisenden NCO-Prepolymer herstellt und dieses dann anschliessend mit dem Sulfonylisocyanat zur Reaktion bringt. Hierzu geeignete Gemische aus Polyisocyanatkomponente a) und tert.-Stickstoffatome aufweisenden NCO-Prepolymeren sind sowohl (i) «NCO-Semiprepolymere», die durch Umsetzung von tert.-Stickstoffatome aufweisenden mehrwertigen Alkoholen der beispielhaft genannten Art mit überschüssigen Mengen an Polyisocyanaten der ebenfalls bereits oben beispielhaft genannten Art (NCO/OH-Molverhältnis grösser als 2:1) erhalten werden oder (ii) Gemische aus aminstickstofffreien NCO-Prepolymeren und tert.-Stickstoffatome aufweisenden NCO-Prepolymeren, die dann erhalten werden, wenn man Gemische aus aminstickstofffreien Polyhydroxylverbindungen der oben beispielhaft genannten Art mit tert.-Stickstoffatomen aufweisenden Polyolen der beispielhaft genannten Art mit überschüssigen Mengen an Polyisocyanaten der ebenfalls beispielhaft genannten Art zur Reaktion bringt. Auch bei diesen Ausführungsformen können gegebenenfalls inerte Lösungsmittel der oben genannten Art mitverwendet werden.

Im Gegensatz zu den Anlagerungsverbindungen b) auf Basis der beispielhaft genannten tert. Amine sind die Anlagerungsverbindungen b) auf Basis der beispielhaft genannten Zinnverbindungen unabhängig von der Art ihrer Herstellung in organischen Medien und somit auch in der Polyisocyanat-Komponente a) einwandfrei löslich. Bei Verwendung von organischen Zinnverbindungen der beispielhaft genannten Art können somit nach allen oben beschriebenen Varianten mit gleich gutem Erfolg erfindungsgemässe Polyisocyanat-Zubereitungen erhalten werden, in denen die Komponente b) in gelöster Form vorliegt.

Im Falle der Verwendung von Isocyanatgruppen-freien tert.-Aminen oder von Zinnkatalysatoren der beispielhaft genannten Art kommen die Polyisocyanatkomponente a) und die Einzelkomponenten der Komponente b) vorzugsweise in solchen Mengen zum Einsatz, dass in den erfindungsgemässen Polyisocyanat-Zubereitungen, bezogen auf die Polyisocyanat-Komponente a) 0,01 bis 10 Gew.-%, vorzugsweise 0,05 bis 5 Gew.-% der Katalysatoren ohne Einbeziehung des Gewichts des Sulfonylisocyanats vorliegen. Bei allen Varianten des erfindungsgemässen Verfahrens werden im übrigen Art und Menge der Ausgangsmaterialien vorzugsweise so gewählt, dass im Falle der Verwendung von tert.-Stickstoffaufweisenden Katalysatoren der Gehalt der erfindungsgemässen Polyisocyanat-Zubereitungen an tert.-Stickstoffatomen (Atomgewicht = 14) bei 0,005 bis 0,3 Gew.-% und bei Verwendung von Zinnkatalysatoren der Gehalt der Polyisocyanat-Zubereitungen an Zinn (Atomgewicht = 118,7) bei 0,008 bis 8,0, vorzugsweise 0,01 bis 4,0 Gew.-% liegt.

Die gegebenenfalls in den erfindungsgemässen Polyisocyanat-Zubereitungen vorliegenden Hilfs- und Zusatzmittel werden den Zubereitungen im allgemeinen im Anschluss an die beschriebene Herstellung der Lösungen bzw. Dispersionen der Komponente b) in der Komponente a) hinzugefügt. Grundsätzlich ist es jedoch auch möglich, die gegebenenfalls mitzuverwendenden Hilfs- und Zusatzmittel der Komponente a) vor der Durchführung der erfindungsgemässen Umsetzung bzw. vor der Abmischung der Komponenten a) und b) einzuverleiben.

Die erfindungswesentlichen Anlagerungsverbindungen zwischen tert. Aminen und Sulfonylisocyanaten stellen sehr wahrscheinlich Betaine der folgenden Struktur dar:

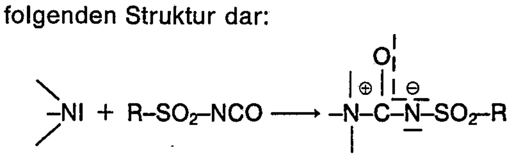

(vgl. DAS 1 100 618 und Z. Brzozowski u. W. Zackarewicz, Roczniki Chemii, 34, 1839 (1960)).

Die Struktur der erfindungswesentlichen Anlagerungsverbindungen der Zinnkatalysatoren ist nicht bekannt und kann evtl. mit den nachstehenden tautomeren Formeln beschrieben werden: Zinn(II)-carboxylate:

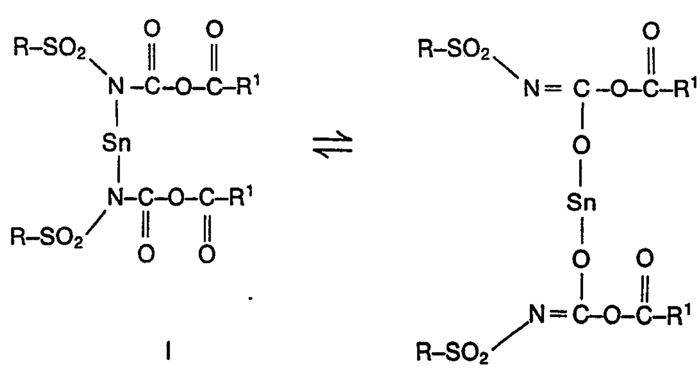

I

II

und Zinn(IV)-carboxylate:

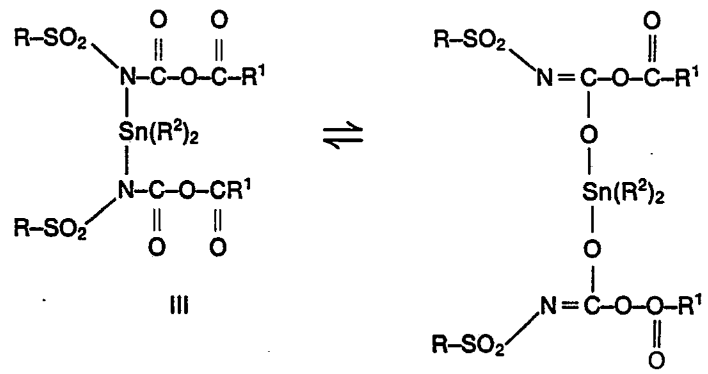

III

IV

In diesen Formeln steht R für den indifferenten Rest des Sulfonylisocyanats, $R^1$ für den indifferenten Rest des Carboxylatanions und $R^2$ für die indifferenten, direkt mit dem Zinnatom in homöopolarer Bindung verknüpften organischen Reste der Zinn(IV)-salze.

Die erfindungswesentlichen Anlagerungsverbindungen stellen 1:1-Addukte der Isocyanato-Sulfonyl-Gruppen an die tert. Aminogruppen bzw. die Carboxylatanionen dar. Die Anlagerungsverbindungen sind extrem hydrolyse- bzw. alkoholyseempfindlich und werden durch Zutritt von Wasser (Substrat- oder Luftfeuchtigkeit) und/oder Verbindungen mit gegenüber Isocyanatgruppen reaktionsfähigen Gruppen, insbesondere Hydroxylgruppen unter Freisetzung der Katalysatoren zerlegt. Vor dieser hydrolytischen bzw. alkoholytischen Spaltung der erfindungswesentlichen Anlagerungsverbindungen sind diese gegenüber Isocyanatgruppen völlig inert und bewirken auch keinerlei, die Lagerstabilität von organischen Polyisocyanaten beeinträchtigende Nebenreaktionen. Die erfindungsgemässen Polyisocyanat-Zubereitungen stellen daher äusserst interessante, blokkierte Katalysatoren enthaltende Ausgangsmaterialien für die Herstellung von Polyurethankunststoffen dar und können zur Herstellung beliebiger Polyurethankunststoffe, z.B. zur Herstellung von Schaumstoffen, Elastomeren, Beschichtungen oder Verklebungen Verwendung finden. Die erfindungsgemässen Polyisocyanat-Zubereitungen können hierzu sowohl nach dem Einkomponenten- als nach dem Zweikomponenten-Prinzip mit Verbindungen mit gegenüber Isocyanatgruppen reaktionsfähigen Gruppen ausgehärtet werden, wobei im letztgenannten Fall im allgemeinen Wasser (Substrat- oder Luftfeuchtigkeit), die «Verbindungen mit gegenüber Isocyanatgruppen reaktionsfähigen Gruppen» darstellt. Bei der erfindungsgemässen Verwendung der erfindungsgemässen Polyisocyanat-Zubereitungen nach dem Zweikomponenten-Prinzip können die aus der Polyurethanchemie an sich bekannten Verbindungen mit gegenüber Isocyanatgruppen reaktionsfähigen Gruppen, insbesondere Hydroxylgruppen, wie sie beispielhaft bereits oben im Zusammenhang mit der Herstellung der NCO-Prepolymeren offenbart worden sind, ebenso wie alle üblichen Hilfs- und Zusatzmittel der Polyurethanchemie zur Anwendung gelangen, wobei anstelle der üblicherweise verwendeten Polyisocyanat-Komponente die erfindungsgemässen Polyisocyanat-Zubereitungen eingesetzt werden. Von besonderem Interesse sind die erfindungsgemässen Polyisocyanat-Zubereitungen als bzw. zur Herstellung von, unter dem Einfluss von Luftfeuchtigkeit vernetzbare(n) Einkomponenten-Systeme(n), wie sie als Klebstoffe oder für die Oberflächenlackierung eingesetzt werden. Die erfindungsgemässen Polyisocyanat-Zubereitungen stellen in Abwesenheit von Feuchtigkeit lagerstabile Systeme dar, die bei Zutritt von Luftfeuchtigkeit praktisch ebenso schnell aushärten wie die entsprechenden, nichtblockierte Katalysatoren enthaltende Systeme des Standes der Technik. Bei der Herstellung von Hilfs- und Zusatzmittel, insbesondere von Lösungsmittel und/oder Pigmente bzw. Füllstoffe enthaltenden, erfindungsgemässen Polyisocyanat-Zubereitungen kann diese Lagerstabilität gewünschtenfalls durch Verwendung eines Überschusses an Sulfonylisocyanat (bezogen auf die tert. Amin-Stickstoffatome bzw. die Zinnverbindungen) zwecks «Neutralisation» der in den Hilfs- und Zusatzmitteln gegebenenfalls vorliegenden Feuchtigkeitsspuren sichergestellt werden (vgl. US-PS 3 330 849 und insbesondere US-PS 3 479 325).

In den nachfolgenden Beispielen beziehen sich alle Angaben in «Prozent» bzw. «Teilen» auf Gew.-% bzw. -teile.

Beispiel 1

Herstellung von Addukten aus tert. Aminen und Sulfonylisocyanaten (Tabelle 1)

Allgemeine Arbeitsvorschrift zur Herstellung der kristallisierten Additionsverbindungen:

In 100 ml wasserfreiem Essigester legt man 0,1 mol des betreffenden Amins vor und tropft dann eine, bezogen auf den tert. Amin-Stickstoff äquimolare Menge Sulfonylisocyanat bei 10 bis 20 °C innerhalb von 15 Min. zu. Es scheidet sich ein kristalliner Niederschlag ab, der über eine Umkehrfritte abgenutscht wird, mit ca. 25 ml wasserfreiem Essigester gewaschen wird und dann im Vakuum vom restlichen Lösungsmittel befreit wird.

Die Verbindungen 1a–g sind in ihrer kristallisierten Form in aprotischen, geringer polaren or-

Tabelle 1

| Ausgangsprodukte | | Addukte: Fp | Spektraldaten | Summenformel und Mol-Massen | Elementaranalyse (%) | |
|---|---|---|---|---|---|---|
| 1a) 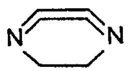 | TOSNCO[1] | | IR: C=O 1725 $cm^{-1}$<br>(KBr) | $C_{22}H_{26}N_4O_6S_2$<br>(507) | gef.<br>N 11,1 | ber.<br>11,1 |
| 11,2 g | 39,4 g | 218 °C | | | S 12,5 | 12,7 |
| 1b) 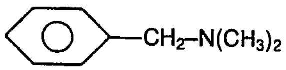 | TOSNCO | | $^1$H-NMR: ($CDCl_3$)[2]<br>$CH_2$: 3,83 ppm S<br>$N(CH_3)_2$: 2,5 ppm S<br>Ar-$CH_3$: 2,36 ppm S | $C_{17}H_{20}N_2O_3S$<br>(332) | N 8,2<br>S 9,5 | 8m4<br>9,6 |
| 13,5 g | 19,7 | 95 °C | | | | |
| 1c) 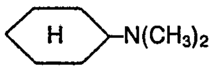 | TOSNCO | | IR (KBr):<br>C=O: 1740 $cm^{-1}$<br>IR($CHCl_3$)<br>C=O: 1665 $cm^{-1}$ | $C_{16}H_{24}N_2O_3S$<br>(324) | N 8,4<br>S 9,8 | 8,6<br>9,8 |
| 12,7 g | 19,7 | 99 °C | | | | |
| 1d) 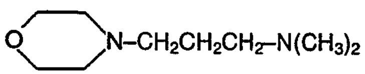 | TOSNCO | | | $C_{25}H_{34}N_4O_7S_2$<br>(566) | N 9,8<br>S 11,0 | 9,9<br>11,3 |
| 17,2 g | 39,4 | 127°C | | | | |
| 1e) $(CH_3)_2N-CH_2CH_2-N-CH_2CH_2-N(CH_3)_2$ (1)[3]<br>$CH_3$ | TOSNCO | | IR(KBr):<br>C=O: 1730 $cm^{-1}$ | $C_{33}H_{44}N_6O_9S_3$<br>(764) | N 12,5<br>S 11,9 | 12,6<br>11,0 |
| 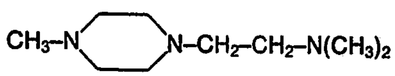 (4)[3] | 59,1 g | 135 °C | | $C_{33}H_{42}N_6O_9S_3$<br>(762) | | |
| 17,2 g | | | | | | |

Anmerkungen: 1) TOSNCO: 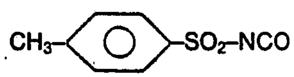

2) $^1$H–NMR-Spektrum vom freien Benzyl-N-dimethylamin ($CDCl_3$): $CH_2$: 3,40 ppm S; $N(CH_3)_2$: 2,20 ppm S;
3) Mischungsverhältnis: 1 : 4

Tabelle 1 (Fortsetzung)

| | Ausgangsprodukte | | Addukte: Fp | Spektraldaten | Summenformel und Mol-Massen | Elementaranalyse (%) | gef. | ber. |
|---|---|---|---|---|---|---|---|---|
| 1f) | 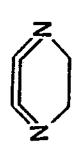 11,2 g | $C_6H_5SO_2NCO$ 36,6 g | 140 °C | IR (KBr): C=O: 1740 $cm^{-1}$ | $C_{20}H_{22}N_4O_6S_2$ (478) | N<br>S | 11,7<br>13,4 | 11,7<br>13,4 |
| 1g) | 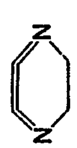 11,2 g | $C_9F_{17}SO_2NCO$ 105,0 g | 183 °C | IR (NUJOL) C=O: 1785 $cm^{-1}$ | $C_{24}H_{12}F_{34}N_4O_6S_2$ (1162) | N<br>S | 5,0<br>5,9 | 4,8<br>5,5 |

ganischen Lösungsmitteln unlöslich, ebenso in Isocyanaten wie z.B. Hexamethylendiisocyanat oder 2,4-Toluylendiisocyanat. In chlorierten Lösungsmitteln wie Methylenchlorid und Ketonen wie Methylenethylketon sind sie ebenfalls nur schwer löslich, man kann jedoch einen weitaus höheren Anteil in Lösung bringen, wenn die Adduktbildung direkt in dem betreffenden Lösungsmittel durchgeführt wird, wie Beispiel 2 zeigt. Die in Lösungsmitteln und auch in organischen Polyisocyanaten weitgehend unlöslichen Addukte können in organischen Polyisocyanaten zu erfindungsgemässen (jedoch weniger bevorzugten) Polyisocyanat-Zubereitungen dispergiert werden.

Beispiel 2

Addukte aus tert. Aminen bzw. Zinncarboxylaten und p-Toluolsulfonylisocyanat in Lösung (Tabelle 2)

Allgemeine Herstellungsvorschrift:

Man löst das tert. Amin bzw. das Zinncarboxylat in dem angegebenen Lösungsmittel auf, kühlt auf 10 bis 15 °C ab und gibt dann bei dieser Temperatur die äquivalente Menge p-Toluolsulfonylisocyanat (Tosylisocyanat) hinzu, wobei leicht gekühlt werden muss. Die exotherme Adduktbildung findet spontan statt; im IR-Spektrum ist nach vollständiger Zugabe des Tosylisocyanats keine NCO-Bande mehr vorhanden (2240 $cm^{-1}$). Die so erhaltenen Lösungen der Addukte sind zur Herstellung von erfindungsgemässen Polyisocyanat-Zubereitungen durch Vermischen mit organischen Polyisocyanaten geeignet.

Beispiel 3

Zersetzung der gelösten Addukte durch Wasser.

10 ml der Lösungen 2a–e werden mit 0,5 g Wasser geschüttelt. Man beobachtet augenblicklich eine lebhafte Kohlendioxid-Entwicklung, die nach ca. 1 Min. beendet ist. Nach dieser zeit ist sämtliches Tosylisocyanat ins Tosylamid zersetzt und die Amine bzw. Zinncarboxylate liegen in ihrer freien Form vor.

Beispiel 4

Zersetzung der kristallinen Addukte 1a–1g bei Raumtemperatur durch Luftfeuchtigkeit

1,0 g der kristallinen Addukte 1a–g werden auf einem Uhrglas bei RT und einer Luftfeuchtigkeit von 50–55% offen stehengelassen und die Kristallveränderung sowie die Gewichtsabnahme bestimmt.

1d, 1e und 1f beginnen nach 30 Min. unter Schäumen zu zerfliessen und sind nach ca. 5 Stdn. völlig zersetzt.

Die Gewichtsabnahme ist nur minimal (ca. 30 mg), bedingt durch stark hygroskopisches Verhalten der Zersetzungsprodukte. Die restlichen Verbindungen zeigen auch nach 8 Tagen keine (optisch) erkennbaren Kristallveränderungen. Die Produkte sind pulvertrocken und zeigen folgende Gewichtsverluste:

| Verbindung: | 1a | 1b | 1c | 1g |
|---|---|---|---|---|
| Restgewicht (g): | 0,931 | 0,823 | 0,827 | 0,996 |

Tabelle 2
Zusammensetzung der Lösungen aus Katalysator und Tosylisocyanat

| Katalysator Menge | Tosylisocyanat Menge | Lösungsmittel Menge | Konzentration d. Katalysators |
|---|---|---|---|
| 2a) 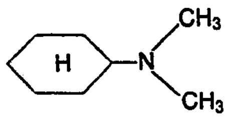 5,0 g | 8,0 g | 87,0 g Methylenchlorid | 5% |
| 2b) 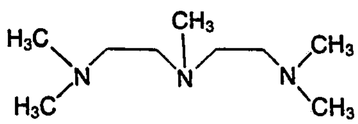 5,0 g | 17,5 g | 77,5 g Methylethylketon | 5% |
| 2c) 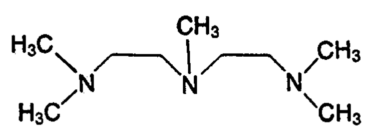 (1)[1] 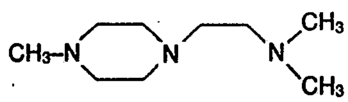 (4)[1] 10,0 g | 34,5 g | 55,5 g Methylethylketon | 10% |
| 2d) Dibutylzinndilaurat 10,0 g | 6,3 g | 83,7 g Butylacetat | 10% |
| 2e) Zinn (II)-octoat 5,0 g | 4,9 g | 90,1 g Methylethylketon | 5% |

[1] Mischungsverhältnis = 1 : 4

Kontrollversuch:

1,0 g p-Toluolsulfonylisocyanat ist bei gleichen Bedingungen nach 20 Min. völlig zersetzt; die Gewichtsabnahme beträgt 40 mg. Die Stabilität der Anlagerungsprodukte gegenüber Feuchtigkeit ist somit im allgemeinen weit höher als die von reinem Tosylisocyanat, so dass nicht zu erwarten war, dass die Anlagerungsprodukte brauchbare, d.h. durch Feuchtigkeitseinfluss schnell aktivierbare PUR-Katalysatoren darstellen.

In den nachfolgenden Beispielen wird gezeigt, dass sich die erfindungsgemässen Addukte, wenn sie gelöst bzw. dispergiert in einem Isocyanat-System vorliegen, wie verkappte Polyurethankatalysatoren verhalten und durch Luftfeuchtigkeit oder z.B. Hydroxylverbindungen schnell entblockt werden.

Im folgenden verwendete Abkürzungen:

Roh-MDI: 4,4'-Diisocyanatodiphenylmethan im Gemisch mit seinen Isomeren und höheren Homologen, wie sie durch Phosgenierung von Anilin-Formaldehyd-Kondensaten erhalten werden, NCO-Gehalt: 30,4%, Viskosität (25 °C): 80 mPa · s.

DBTL: Dibutylzinndilaurat.

Amingemisch: 1:4 Gemisch von Pentamethyldiethylentriamin und N-Methyl-N'-(2-dimethylaminoethyl)piperazin.

TOSNCO: p-Toluolsulfonylisocyanat.

HDI: Hexamethylendiisocyanat.

Zur Prüfung der klebtechnischen Eigenschaften der Produkte werden Prüfkörper aus glasfaserverstärktem Polyesterharz (30% Glasgehalt) der Abmessung 2×4×0,3 cm mit Glaspapier leicht angerauht und ca. 2 Sekunden über kochendes Wasser gehalten, damit sich die für die Reaktion benötigte Feuchtigkeit an der Oberfläche kondensiert. Nach dem Auftrag des Klebstoffes werden die Prüfkörper so zusammengelegt, dass eine überlappte Fläche von 2 $cm^2$ vorliegt. Die Prüfkörper werden anschliessend mit einem Druck von 0,3 MPAa gepresst. Die Scherfestigkeit wird nach DIN 53 283 mit einem Spindelvorschub von 100 mm/Min: nach den unten angegebenen Zeiten ermittelt.

Zur Ermittlung der Lagerstabilität werden Klebstoffproben in dicht verschlossenen Glasflaschen von 100 ml bei 23 °C solange gelagert, bis Gelierung eintritt, bzw. bis zu den angegebenen Maximalzeiten.

Zur Prüfung der Filmtrocknung wird ein 200 µm dicker Film mit einer Hantel auf einer Glasplatte aufgezogen und manuell der Zeitpunkt, an dem die beschichtete Fläche klebfrei ist, bestimmt; Bedingungen: 22–24 °C, Luftfeuchtigkeit 45–50%.

Beispiel 5a

100 Teile eines NCO-Prepolymeren mit einem NCO-Gehalt von 12,4% und einer Viskosität (25 °C) von 7500 mPa · s, welches dadurch erhalten wird, dass man Polypropylenglykol der OH-Zahl 56 mit einer dem angegebenen NCO-Gehalt entsprechenden Menge an Roh-MDI umsetzt, werden mit 0,2 Teilen DBTL vermischt und darauf auf 20 °C mit 0,13 Teilen TOSNCO unter Feuchtigkeitsausschluss intensiv zu einer erfindungsgemässen Polyisocyanat-Zubereitung verrührt.

Vergleichsbeispiel 5b

100 Teile des NCO-Prepolymeren aus Beispiel 5a werden mit 0,2 Teilen DBTL intensiv verrührt.

Beispiel 6a

Analog zu Beispiel 5a, jedoch mit 0,3 Teilen DBTL und 0,19 Teilen TOSNCO.

Vergleichsbeispiel 6b

100 Teile des NCO-Prepolymeren aus Beispiel 5a werden mit 0,3 Teilen DBTL intensiv verrührt.

Beispiel 7a

100 Teile des NCO-Prepolymeren aus Beispiel 5a werden mit 0,2 Teilen Amingemisch vermischt und darauf bei 20 °C mit 0,7 Teilen TOSNCO innerhalb von 2 Min. unter Feuchtigkeitsausschluss intensiv zu einer erfindungsgemässen Polyisocyanat-Zubereitung verrührt.

Vergleichsbeispiel 7b

100 Teile des NCO-Prepolymeren aus Beispiel 5a werden mit 0,2 Teilen Amingemisch intensiv verrührt.

Beispiel 8a

100 Teile des NCO-Prepolymeren aus Beispiel 5a werden mit 0,3 Teilen Amingemisch, gelöst in 10 Teilen wasserfreiem Methylenchlorid, vermischt. Dann zieht man im Vakuum das Methylenchlorid bei 30 °C wieder völlig ab und versetzt bei 20 °C mit 1,1 Teilen TOSNCO innerhalb von 2 Min. unter Feuchtigkeitsausschluss. Die Lösung trübt ein und es scheidet sich ein feindisperser Feststoff ab, der sich nach 2 Tagen langsam absetzt.

Vergleichsbeispiel 8b

100 Teile des NCO-Prepolymeren aus Beispiel 5a werden mit 0,3 Teilen Amingemisch, gelöst in 10 Teilen wasserfreiem Methylenchlorid, intensiv verrührt und darauf das Methylenchlorid bei 30 °C im Vakuum wieder vollständig entfernt.

Beispiel 9a

100 Teile des NCO-Prepolymeren aus Beispiel 5a werden mit 0,1 Teil Amingemisch vermischt und darauf bei 20 °C mit 0,4 Teilen TOSNCO unter Feuchtigkeitsausschluss intensiv verrührt. Nach 5 Min. gibt man 0,25 Teile DBTL hinzu und vermischt dann mit weiteren 0,17 Teilen TOSNCO.

Vergleichsbeispiel 9b

100 Teile des NCO-Prepolymeren aus Beispiel 5a werden mit 0,1 Teil Amingemisch und 0,25 Teilen DBTL intensiv verrührt.

Die Proben der Beispiele 5a bis 9a und der entsprechenden Vergleichsbeispiele, sowie das unkatalysierte NCO-Prepolymere aus Beispiel 5a wurden auf ihre klebtechnischen Eigenschaften überprüft. Die ermittelten Scherfestigkeiten sind in Tabelle 3 zusammengestellt. Ausserdem wurde die Lagerstabilität der Produkte überprüft (Tabelle 4). Die erfindungsgemässen Gemische besitzen bei Raumtemperatur (20–25 °C) eine Lagerstabilität von über 6 Monaten.

Tabelle 3:
Scherfestigkeiten (in N/mm$^2$) nach:

| | 30′ | 60′ | 120′ | 24 h |
|---|---|---|---|---|
| Beispiel 5a) (Kontrolle: unkatalysiert): | – | – | – | 8,5 |
| Beispiel 5a): | 7,5 | 8,0 | 8,5 | 9,6* |
| Vergl.-Beispiel 5b: | 5,0 | 7,5 | 8,5 | 10,0* |
| Beispiel 6a): | 7,5 | 7,5 | 8,2 | 9,8* |
| Vergl.-Beispiel 6b): | 6,0 | 8,5 | 8,5* | 10,4* |
| Beispiel 7a): | – | – | 1,5 | 10,2* |
| Vergl.-Beispiel 7b): | – | – | 1,5 | 9,8* |
| Beispiel 8a): | – | – | 1,5 | 9,6* |
| Vergl.-Beispiel 8b): | – | – | 1,5 | 10,2* |
| Beispiel 9a): | 2,1 | 4,1 | 6,0 | 10,2* |
| Vergl.-Beispiel 9b): | 3,0 | 6,0 | 7,2 | 10,6* |

Bemerkung: *mit Delaminierung

Tabelle 4:
Lagerstabilität (A: bei 23 °C; B: bei 50 °C) (angegeben ist die Zeit bis zur Gelierung, bzw. die Mindesthaltbarkeit, die bei > erheblich länger sein kann).

| | | |
|---|---|---|
| Beispiel 5a) (Kontrolle unkatalysiert): | | A: > 6 Monate<br>B: > 6 Monate |
| Beispiel 5a) | : | A: > 6 Monate<br>B: ca. 4 Monate |
| Vergl.-Beispiel 5b) | : | A: ca. 5 Monate<br>B: ca. 1 Monat |
| Beispiel 6a) | : | A: > 6 Monate<br>B: 2,5 Monate |
| Vergl.-Beispiel 6b) | : | A: 15 Tage<br>B: 10 Tage |
| Beispiel 7a) | : | A: > 6 Monate<br>B: > 6 Monate |
| Vergl.-Beispiel 7b) | : | A: 5–6 Monate<br>B: 3–4 Monate |
| Beispiel 8a) | : | A: > 6 Monate<br>B: > 6 Monate |
| Vergl.-Beispiel 8b) | : | A: ca. 5 Monate<br>B: 40 Tage |
| Beispiel 9a) | : | A: > 6 Monate<br>B: 30 Tage |
| Vergl.-Beispiel 9b) | : | A: 10 Tage<br>B: 3 Tage |

Beispiel 10

100 Teile eines NCO-Prepolymeren mit einem NCO-Gehalt von 11,9% und einer Viskosität (25 °C) von 6700 mPa · s, welches dadurch erhalten wird, dass man ein Polyetherglykol der OH-Zahl 56, und mit einem Gehalt an Ethylenoxid-Einheiten von 50 Gew.-%, dessen Hydroxylgruppen zu 60% primäre Hydroxylgruppen darstellen, und das durch Alkoxylierung von Propylenglykol mit einem Gemisch aus Propylenoxid und Ethylenoxid erhalten worden ist, mit Roh-MDI umsetzt, werden mit 0,5 Teilen DBTL vermischt und darauf bei 20 °C mit 0,32 Teilen TOSNCO unter Feuchtigkeitsausschluss intensiv verrührt. Das Gemisch ist in einem dicht verschlossenen Gebinde bei 23 °C auch nach halbjähriger Lagerung unverändert, während das Produkt ohne TOSNCO nach 18 Tagen geliert ist. Die Prüfung der klebtechnischen Eigenschaften ergab folgende Scherfestigkeiten (in N/$mm^2$):

| | | |
|---|---|---|
| nach | 30': | 3,7 |
| | 60': | 7,0 |
| | 120': | 8,2 |
| | 24 h: | 9,6 (mit Delaminierung) |

Filmtrocknung: 6,5 Stunden (identisch mit freiem DBTL)

Kontrolle:

Das unkatalysierte NCO-Prepolymere besitzt folgende Scherfestigkeiten (in N/$mm^2$):

| | | |
|---|---|---|
| nach | 30': | 2,6 |
| | 60': | 3,0 |
| | 120': | 4,8 |
| | 24 h: | 9,4 (mit Delaminierung) |

Filmtrocknung: > 12 Stunden

Beispiel 11

100 Teile des NCO-Prepolymeren aus Beispiel 10 werden unter Feuchtigkeitsausschluss bei 20 °C mit 5,0 Teilen der Lösung 2d aus Beispiel 2 verrührt und danach bei 50 °C im Vakuum vom Lösungsmittel (Butylacetat) wieder vollständig befreit. Lagerstabilität und Scherfestigkeiten entsprechen denen aus Beispiel 10.

Beispiel 12

100 Teile des NCO-Prepolymeren aus Beispiel 10 werden unter Feuchtigkeitsausschluss bei 20 °C mit 0,5 Teilen Amingemisch vermischt und darauf unter leichter Kühlung bei 15°–20 °C mit 1,8 Teilen TOSNCO intensiv verrührt. Die klare Lösung besitzt bei 23 °C eine mindestens halbjährige Lagerstabilität; die ermittelten Scherfestigkeiten aus der klebtechnischen Prüfung entsprechen den Scherfestigkeiten des unkatalysierten NCO-Prepolymeren aus Beispiel 10.
Filmtrocknung: 6 Stdn., (unkatalysiert: > 12 h).
Filmtrocknung: (ohne TOSNCO): 35 Min.

Die Beispiele 10 und 12 zeigen, dass das «Amingemisch» im Film eine schnellere Aushärtung bewirkt als DBTL, während DBTL zu verbesserten klebetechnischen Werten (Scherfestigkeiten) führt. Der gleiche Befund ergibt sich aus den Beispielen 5 bis 8.

Beispiel 13

100 Teile des NCO-Prepolymeren aus Beispiel 10 werden unter Feuchtigkeitsausschluss bei 20 °C mit 5,0 Teilen der Lösung 2c aus Beispiel 2 verrührt und danach bei 50 °C im Vakuum vom Lösungsmittel befreit. Aus dem Gemisch kristallisiert ein feiner Niederschlag aus, der sich als Bodensatz absetzt. Durch einfaches Schütteln und/oder Rühren kann dieser Bodensatz redispergiert werden. Die Lagerstabilität bleibt unbeeinflusst.

Beispiel 14

100 Teile des NCO-Prepolymeren aus Beispiel 10 werden unter Feuchtigkeitsausschluss bei 40 °C 12 Stdn. mit 2,3 Teilen des kristallinen Addukts 1e aus Beispiel 1 verrührt. Das Produkt 1e bleibt völlig unlöslich, und setzt sich als feinkristalliner Niederschlag ab. Die Lagerstabilität bleibt unbeeinflusst.

Die Beispiele 12 bis 14 zeigen, dass es zur Herstellung von erfindungsgemässen Polyisocyanat-Zubereitungen auf Basis von tert. Aminen zweckmässig ist, gemäss der bevorzugten Verfahrensvariante (Herstellung der Anlagerungsverbindungen im Polyisocyanat) vorzugehen, um zu stabilen Lösungen zu gelangen, während Bsp. 11 zeigt,

dass die Verfahrensvariante bei Zinn-Verbindungen unerheblich ist.

Beispiel 15

100 Teile eines NCO-Prepolymeren mit einem NCO-Gehalt von 11,9% und einer Viskosität (25 °C) von 7350 mPa · s, welches dadurch erhalten wird, dass man ein 1:1-Gemisch eines Polypropylenglykols der OH-Zahl 56 und des Polyetherglykols aus Beispiel 10 mit Roh-MDI umsetzt, werden mit 0,5 Teilen DBTL vermischt und darauf unter Feuchtigkeitsausschluss bei 20 °C mit 0,32 Teilen TOSNCO intensiv verrührt.

Die Lagerstabilität des Gemisches entspricht dem aus Beispiel 10.

Die Prüfung der klebtechnischen Eigenschaften ergab folgende Scherfestigkeiten (in N/mm²):

| | | |
|---|---|---|
| nach | 30': | 4,0 |
| | 60': | 6,0 |
| | 120': | 7,2 |
| | 24 h: | 10,0 (mit Delaminierung) |

Das unkatalysierte NCO-Prepolymere besitzt folgende Scherfestigkeiten (in N/mm²);

| | | |
|---|---|---|
| nach | 30': | – |
| | 60': | 5,5 |
| | 120': | 7,0 |
| | 24 h: | 10,2 (mit Delaminierung) |

Ein Vergleich der Beispiele 5, 10 und 15 zeigt, dass ein bestimmter Gehalt an Ethylenoxid-Gruppen im Polyether verbesserte Klebeeigenschaften mit sich bringt.

Beispiel 16

Zu 100 Teilen eines aliphatische Isocyanatgruppen enthaltenden Polyurethanprepolymeren, welches als 60%ige Lösung in Ethylglykolacetat/Xylol (4:1) einen NCO-Gehalt von 9,5% besitzt, hergestellt aus einem Biuret-Polyisocyanat auf Basis von Hexamethylendiisocyanat mit einem NCO-Gehalt von 22% und einem Hydroxylgruppen enthaltenden Polyesterpolyol der OH-Zahl 66 aus Phthalsäureanhydrid und Trimethylolpropan, gibt man unter Feuchtigkeitsausschluss 0,44 Teile eines 1:2-Addukts aus DBTL und TOSNCO, welches man zuvor in wasserfreiem Methylenchlorid aus 0,6 Teilen DBTL und 0,38 Teilen TOSNCO analog Beispiel 2 und durch Abziehen des Methylenchlorids bei 30 °C im Vakuum hergestellt hat. Das Addukt ist klar löslich. Die Lagerstabilität ist grösser als ein halbes Jahr. Ein Vergleichsprodukt ohne TOSNCO ist nach der gleichen Zeit in der Viskosität deutlich angezogen und nicht mehr zu verarbeiten.

Filmtrocknung: 5 Stdn.

Filmtrocknung: (Vergleichsprodukt ohne TOSNCO): 5 Stdn.

Kontrolle:

Filmtrocknung (unkatalysiert): >24 Stdn.

Beispiel 17

100 Teile Roh-MDI werden mit 0,5 Teilen DBTL unter Feuchtigkeitsausschluss versetzt und anschliessend bei 20 °C mit 0,36 Teilen p-Isocyanatophenylsulfonylisocyanat verrührt. Die klare Mischung besitzt eine Lagerstabilität von über 6 Monaten. Das unblockierte Vergleichsprodukt dagegen ist nach dieser Zeit völlig eingedickt.

Beispiel 18

40 Teile des bei Raumtemperatur gelagerten (3 Monate), mit blockiertem DBTL versetzten Roh-MDI aus Bsp. 17 werden mit 100 Teilen eines Hilfs- und Zusatzmittel enthaltenden Polyolgemischs versetzt. Das Polyolgemisch besteht aus

| | |
|---|---|
| 50 Teilen | eines Polyetherpolyols der OH-Zahl 380, hergestellt durch Propoxylierung von Trimethylolpropan, |
| 20 Teilen | eines Polyetherpolyols der OH-Zahl 112, hergestellt durch Propoxylierung von Propylenglykol, |
| 30 Teilen | Rizinusöl, |
| 100 Teilen | Kreide, |
| 10 Teilen | handelsüblicher Zeolith-Paste und |
| 4 Teilen | eines handelsüblichen Entlüftungsmittels |

Das NCO/OH-Verhältnis liegt bei 1:1. Das so hergestellte Gemisch ist nach einer Minute zu einem Festkörper erstarrt. Die gleiche kurze Tropfzeit wird erreicht, wenn unblockiertes DBTL (0,5% bezogen auf Roh-MDI) eingesetzt wird. Ohne Katalysator beträgt die Tropfzeit dagegen 120 Min.

Dieses Beispiel zeigt, dass das erfindungsgemäss blockierte Zinnsalz mit einem Polyisocyanat einerseits zu einer lagerstabilen Lösung vereinigt werden kann und andererseits beim Zutritt von Hydroxylgruppen aufweisenden Verbindungen augenblicklich seine katalytische Aktivität entfaltet.

In den nachfolgenden Beispielen werden zusätzlich zu den bereits oben gebrauchten Abkürzungen folgende Abkürzungen verwendet:

| | |
|---|---|
| TDI 100: | 2,4-Diisocyanato-toluol. |
| TDI 80: | Mischung aus 80% 2,4- und 20% 2,6-Diisocyanato-toluol. |
| TDI 65: | Entsprechende Mischung im Verhältnis 65:35. |

Beispiel 19a

Zu 100 g TDI 100 gibt man unter Feuchtigkeitsausschluss 1,0 g N,N-Dimethylcyclohexylamin und anschliessend bei 25 °C 1,6 g TOSNCO. Es entsteht eine klare Lösung, aus der jedoch nach 48 Stdn. das entstandene Addukt langsam auskristallisiert. Das überstehende 2,4-TDI bleibt unverändert (Lagerzeit 6 Monate). Durch einfaches Schütteln und/oder Rühren kann der Bodensatz redispergiert werden.

Beispiel 20a

Zu 100 g TDI 100 gibt man unter Feuchtigkeitsausschluss 20 g der Lösung 2a aus Beispiel 2 und zieht das Lösungsmittel im Vakuum bei 40 °C wieder vollständig ab. Man erhält eine klare, gelbe Lösung, aus der nach ca. 3 Tagen langsam das Katalysatoraddukt auskristallisiert. Das überstehende 2,4-TDI bleibt unverändert (Lagerzeit 6 Monate).

Vergleichsbeispiele 19b und 20b

Zu 100 g TDI 100 gibt man 1,0 g N,N-Dimethylcyclohexylamin. Die klare Lösung ist nach 24 Stdn. völlig durchpolymerisiert und zu einem «Stein» erstarrt.

Beispiel 21a

Zu 0,62 g TOSNCO gibt man unter Feuchtigkeitsausschluss bei 10 °C 0,6 g Zinn(II)-octoat und verrührt 10 Min. Danach vermischt man bei 25 °C mit 100 g TDI 100. Man erhält eine klare Lösung, die bei einer Lagerung 30 °C über Monate stabil bleibt.

Vergleichsbeispiel 21b

Zu 100 g TDI 100 gibt man unter Feuchtigkeitsausschluss 0,6 g Zinn(II)-octoat. Man erhält eine klare Lösung, bei der nach 24 Stdn. ein weisser Niederschlag ausflockt und die nach zwei Monaten unter Gelbfärbung polymerisiert.

Beispiel 22

In 15 g TDI 100 suspendiert man 0,68 g des Feststoffkomplexes 1a aus Beispiel 1.

Beispiel 23

In 15 TDI 100 suspendiert man 0,64 g des Feststoffkomplexes 1f aus Beispiel 1.

Beispiel 24

In 15 g TDI 100 suspendiert man 1,55 g des Feststoffkomplexes 1g aus Beispiel 1.

Die Mischung der Beispiele 22 bis 24 sind bezüglich des TDI über ein halbes Jahr stabil. Die Addukte 1a, f und g sind völlig inerte Feststoffe, die als unlöslicher, durch Rühren und/oder Schütteln dispergierbarer Bodensatz vorliegen. Die entsprechende Menge an freiem Diethylentriamin (0,15 g in 15 g TDI 100) führt zur Polymerisation des TDI 100 innerhalb von 24 Stdn. Für den in Tabelle 5 beschriebenen Verquallungstest werden die Mischungen durch intensives Schütteln homogenisiert.

Beispiel 25a

1,0 g Bis-(2-(dimethylamino)ethylether werden in 10 ml wasserfreiem Methylenchlorid gelöst und danach bei 25 °C mit 100 g Roh-MDI vermischt. Man gibt 2,7 g TOSNCO hinzu und verrührt bei 25 °C. Danach zieht man bei 30 °C das Lösungsmittel im Vakuum wieder vollständig ab. Die entstandene Lösung ist unter Ausschluss von Feuchtigkeit 6 Monate lagerstabil.

Vergleichsbeispiel 25b

1,0 g Bis-2-/dimethylamino)ethylether werden in 10 ml wasserfreiem Methylenchlorid gelöst und mit 100 g Roh-MDI vermischt. Danach zieht man bei 30 °C das Lösungsmittel im Vakuum wieder vollständig ab. Die Lösung beginnt nach 6 Wochen deutlich einzudicken und ist nach 6 Monaten polymerisiert.

Beispiel 26a

1,0 g Bis-(3-dimethylamino-propyl)-amin werden in 10 ml wasserfreiem $CH_2Cl_2$ mit 1,1 g TOSNCO bei 20 °C 10 Min. verrührt. Danach gibt man zu dieser Lösung 100 g Roh-MDI und versetzt bei 25 °C mit 2,3 g TOSNCO. Die Mischung wird im Vakuum bei 30 °C vom Lösungsmittel befreit. Sie ist auch nach halbjähriger Lagerung bei Feuchtigkeitsausschluss unverändert.

Beispiel 27a

1,0 g Bis-(3-dimethylamino-propyl)-amin werden in 10 ml wasserfreiem $CH_2Cl_2$ gelöst und bei 20 °C mit 100 g Roh-MDI 5 Min. verrührt. Danach gibt man 2,5 g TOSNCO hinzu und zieht im Vakuum bei 30 °C das Lösungsmittel vollständig ab. Die Mischung ist 6 Monate lagerstabil.

Vergleichsbeispiel 26b und 27b

1,0 g Bis-(3-dimethylamino-propyl)-amin werden in 100 g Roh-MDI gelöst. Die Mischung ist nach 2 Monaten deutlich eingedickt und nach 6 Monaten durchpolymerisiert.

Beispiel 28

Verquallungstest mit den Mischungen der Beispiele 19 bis 27 sowie der entsprechenden Vergleichsbeispiele (Tabelle 5).

Allgemeine Arbeitsvorschrift:

Zu der angegebenen Menge des Polyisocyanatgemisches der jeweiligen Beispiele gibt man die in der Tabelle genannte Menge eines trifunktionellen Polyethers der OH-Zahl 380, hergestellt durch Propoxylierung von Trimethylolpropan (Polyol) und bestimmt die Zeit bis zum Erstarrungspunkt sowie die erreichte Maximaltemperatur bzw. nur die Maximaltemperatur, wenn das Gemisch zähflüssig bleibt. Die Ausführung erfolgte 30 Min. nach Fertigstellung der jeweiligen Lösungen.

Tabelle 5: Verquallungstest (NCO-OH-Äquivalentverhältnis: = 1)

| | Polyisocyanat | Polyol | $T_{max}$ | nach (Min:Sec) | Fest nach (Min:Sec) |
|---|---|---|---|---|---|
| Bsp. 19a) | 30 g | 50 g | 100 °C | 12:04 | – |
| Bsp. 20a) | 30 g | 50 g | 103 °C | 9:30 | 9:30 |
| Bsp. 19b)<br>Bsp. 20b) | 30 g | 50 g | 129 °C | 5:15 | 5:15 |
| Bsp. 21a) | 30 g | 50 g | 131 °C | 4:15 | 0:10 |
| Bsp. 21b) | 30 g | 50 g | 135 °C | 4:30 | 0:10 |
| Standard[1)] | 30 g | 50 g | 93 °C | 16:45 | – |

Tabelle 5: (Fortsetzung)
Verquallungstest (NCO-OH-Äquivalentverhältnis: = 1)

| | Polyisocyanat | Polyol | $T_{max}$ | nach (Min:Sec) | Fest nach (Min:Sec) |
|---|---|---|---|---|---|
| Bsp. 22 | 15 g | 25 g | 82 °C | 10:45 | 10:45 |
| Bsp. 23 | 15 g | 25 g | 102 °C | 6:35 | 4:30 |
| Bsp. 24 | 15 g | 25 g | 65 °C | 13:45 | – |
| Standard[1)] | 15 g | 25 g | 68 °C | 13:50 | – |
| Bsp. 25a) | 46 g | 50 g | 107 °C | 14:00 | 14:00 |
| Bsp. 25b) | 46 g | 50 g | 95 °C | 9:15 | 7:10 |
| Bsp. 26a) | 46 g | 50 g | 85 °C | 25:00 | 25:00 |
| Bsp. 27a) | 46 g | 50 g | 85 °C | 25:10 | 20:00 |
| Bsp. 26b) Bsp. 27b) | 46 g | 50 g | 100 °C | 21:35 | 14:45 |
| Standard[1)] | 46 g | 50 g | 41 °C | 70:00 | – |

Bemerkung: [1)] unkatalysiert

Aus dem Vergleich der Beispiele 19, 20, 25, 26 und 27 mit den jeweiligen Vergleichsbeispielen (Tabelle 5) geht hervor, dass die blockierten tert. Amine im Verquallungstest (Entblockung nicht über das reaktive $H_2O$) nicht ganz so schnell sind wie die freien Katalysatoren, jedoch in ihrer katalytischen Aktivität gegenüber dem unkatalytisierten Standard deutlich höher liegen.

Beispiel 29

100 Teile TDI 80 werden bei 25 °C unter Feuchtigkeitsausschluss mit 0,05 Teilen DBTL und danach mit 0,04 Teilen TOSNCO versetzt. Die klare Lösung ist über ein halbes Jahr lagerstabil.

Beispiel 30

99 Teile modifiziertes Roh-MDI mit einem NCO-Gehalt von 24,5%, hergestellt durch Umsetzung von Roh-MDI mit einem Gemisch aus Di- und Tripropylenglykol (Gewichtsverhältnis = 1:1), werden bei 25 °C unter Feuchtigkeitsausschluss mit 0,6 Teilen DBTL verrührt und danach mit 0,4 Teilen TOSNCO versetzt. Die Lösung besitzt eine Lagerstabilität von über einem halben Jahr.

Beispiel 31

Herstellung von Polyurethanweichschaum bei Katalyse mit einem Komplex aus DBTL und Tosylisocyanat, gelöst in einem Gemisch aus TDI 80 und Roh-MDI.

Zum Vergleich der Wirksamkeit des Katalysators wurden drei Proben geschäumt, die sich allein durch den Einsatz von DBTL unterscheiden: Die erste enthält kein DBTL; die zweite enthält DBTL in der Polyolformulierung (Stand der Technik); die dritte enthält eine gleiche Menge DBTL, die aber als erfindungsgemässer Tosylisocyanat-Komplex im Isocyanat gelöst war.

Die Polyetherformulierung wurde bei Raumtemperatur mit dem Isocyanat im Mischungsverhältnis 100 zu 37,1 vermischt, was einer Kennzahl 100 entspricht. Am Freischaum wurden Startzeit, Fadenziehzeit, Steigzeit, max. Steiggeschwindigkeit verglichen. An 10 l-Formteilen wurden die mechanischen Eigenschaften der Schaumstoffe ermittelt.

Rezeptur-Bestandteile:

| Polyetherformulierung | Rez. I (Gew.-Tle.) | II | III |
|---|---|---|---|
| a) Trifunktioneller Polyether der OHZ 28, hergestellt durch Propoxylierung und anschliessende Ethoxylierung (Gehalt an Ethylenoxid 13%) von Trimethylolpropan | 80 | 80 | 80 |
| b) Trifunktioneller Polyether wie a) jedoch mit 17,5% Ethylenoxid und 20% organischem Füllstoff (Polyhydrazodicarbonamid) | 20 | 20 | 20 |
| c) Wasser | 3,1 | 2,1 | 3,1 |
| d) Bis-2-(dimethylamino)ethylether | 0,1 | 0,1 | 0,1 |

Rezeptur-Bestandteile: (Fortsetzung)

| Polyetherformulierung | Rez. I (Gew.-Tle.) | II | III |
|---|---|---|---|
| e) 1,4-Diazabicyclo-(2,2,2)octan als 33%ige Lsg. in Isopropanol | 0,4 | 0,4 | 0,4 |
| f) N-(3-Dimethylaminopropyl) formamid | 0,5 | 0,5 | 0,5 |
| g) Polysiloxan-Stabilisator | 1,0 | 1,0 | 1,0 |
| h) DBTL | – | 0,05 | – |

| Isocyanatformulierung | Rez. I | II | III |
|---|---|---|---|
| TDI 80 | 80 | 80 | – |
| rohes MDI | 20 | 20 | 20 |
| Beispiel | – | – | 80 |

Schäumgeschwindigkeit:

| Rezeptur | Liegezeit s | Fadenziehzeit s | Steighöhe s | Steighöhe mm | max. Steiggeschwindigkeit mm/s |
|---|---|---|---|---|---|
| I | 5 | 57 | 136 | 157 | 2,9 |
| II | 4 | 45 | 107 | 174 | 4,5 |
| III | 4 | 43 | 110 | 184 | 4,6 |

Mechanische Eigenschaften

| Rezeptur | I | II | III |
|---|---|---|---|
| Rohdichte, kg/m$^3$ DIN 53420 | 40 | 40,5 | 41,5 |
| Stauchhärte, kPa DIN 53577, = 40% | 3,0 | 2,0 | 3,0 |
| Zugfestigkeit, kPa DIN 53571 | 125 | 155 | 150 |
| Bruchdehnung, % DIN 53571 | 160 | 200 | 190 |
| Weiterreissfestigkeit, KN/m ASTM-D 1564-71 T | 0,27 | 0,33 | 0,47 |
| DVR, % DIN 53572, = 75%, 70 °C, 24 h | 5,6 | 7,7 | 7,4 |

Beispiel 32

Herstellung eines halbharten Polyurethan-Integralschaumstoffs unter Verwendung einer erfindungsgemässen Polyisocyanat-Zubereitung.

Komponente A:

100 Teile eines Polyetherpolyols der OH-Zahl 35, hergestellt durch Propoxylierung von Trimethylolpropan und anschliessender Ethoxylierung des Propoxylierungsprodukts unter Verwendung von 15% Ethylenoxid, bezogen auf die Gesamtmenge an Alkylenoxiden;

9 Teile Ethylenglykol;

14 Teile Trichlorfluormethan.

Komponente B:

62 Teile der Polyisocyanat-Zubereitung gemäss Beispiel 30.

In einem Vorversuch werden die Komponenten A und B mit einem hochtourigen Laborrührer während 10 Sek. miteinander vermischt. Das so erhaltene Reaktionsgemisch weist eine Startzeit (Zeit von Rührbeginn bis Schäumbeginn) von 14 Sek., eine Steigzeit (Zeit von Rührbeginn bis zur Beendigung des Steigvorgangs) von 20 Sek. und eine Abbindezeit (Zeit von Rührbeginn bis zum Abbinden des Schaums) von 23 Sek. auf.

Zur Herstellung eines halbharten Integralschaumstoffes werden in einem zweiten Versuch 320 g des analog dem ersten Versuch hergestellten Reaktionsgemisches in ein geschlossenes Metallwerkzeug der Abmessung 20 × 20 × 4 cm gegeben. Die Innenwände des Metallwerkzeugs waren zuvor mit einem handelsüblichen Formtrennmittel beschichtet worden. Nach einer Formstandzeit von 4 Min. konnte ein Formkörper mit folgenden mechanischen Eigenschaften entformt werden:

| | |
|---|---|
| Rohdichte im zelligen Kern (DIN 53 420): | 135 kg/m$^3$; |
| Stauchhärte (DIN 53 577): | 26 kPa; |
| Zugfestigkeit (DIN 53 571): | 400 kPa; |
| Bruchdehnung (DIN 53 571): | 180% |
| Druckverformungsrest (DIN 53 572, Y = 50%): | 20% |

Beispiel 33

Vergleich verschiedener Sulfonylisocyanate bezüglich Rückspaltaktivität bei der Filmtrocknung:

250 g eines NCO-Prepolymeren, hergestellt aus Polypropylenglykol der OH-Zahl 56 und Roh-MDI, welches als 80%ige Lösung in Methylethylketon einen NCO-Gehalt von 9,6% besitzt, werden unter Feuchtigkeitsausschluss mit 2,5 g N,N-Dimethylcyclohexylamin verrührt. Die Lösung wird dann zu fünf Portionen zu je 50 g aufgeteilt und mit den nachfolgend angegebenen Mengen Sulfonylisocyanat unter Feuchtigkeitsausschluss versetzt:

a) kein Sulfonylisocyanatzusatz
b) 0,8 g TOSNCO
c) 0,75 g Phenylsulfonylisocyanat
d) 2,1 g Perfluoroctylsulfonylisocyanat
e) 0,6 g Chlorsulfonylisocyanat.

30 Min. nach Herstellung wird mit den klaren Lösungen ein Film gezogen (Aushärtbedingungen hier: 32 °C, 60% Luftfeuchtigkeit):

a) 32 Min.
b) 50 Min.
c) 55 Min.
d) 4 Std. 20 Min.
e) 4 Std. 20 Min.
f) (unkatalysiert) 6 Std. 25 Min.

Beispiel 34

a) Zu 160 Teilen eines Roh-MDI, welches 20 Gew.-% an 2,4'-Diisocyanatodiphenylmethan bei einem NCO-Gehalt von 33,1% enthält, gibt man 40 Teile Diphenylkresylphosphat und trägt in diese Lösung dann unter Rühren 144 Teile eines bei 60 °C geschmolzenen Polyesterpolyols der OH-Zahl 66, hergestellt aus Adipinsäure, Hexandiol und Neopentylglykol (Gewichtsverhältnis der Diole = 9:1), ein. Danach gibt man in die Mischung 56 Teile eines Polyetherpolyols der OH-Zahl 150, hergestellt durch Propoxylierung von Triethanolamin, wobei sich die Mischung auf ca. 50 °C erwärmt. Bei dieser Temperatur rührt man 1 Stunde weiter, bis der NCO-Gehalt von 9,9% erreicht ist. Anschliessend wird auf Raumtemperatur abgekühlt. Nach 24-stündiger Lagerung bei Raumtemperatur beträgt der NCO-Gehalt 9,0%. Die Lagerstabilität bei Raumtemperatur beträgt im geschlossenen Gebinde bis zur Vergelung 53 Tage.

b) Das frisch zubereitete NCO-Prepolymer gemäss Beispiel 34a) mit einem NCO-Gehalt von 9,9% wird in einem Parallelversuch während einer Stunde bei 30 °C gerührt und dann innerhalb von ca. 10 Minuten langsam mit 10,8 g Tosylisocyanat versetzt. Nach 24-stündiger Lagerung bei Raumtemperatur beträgt der NCO-Gehalt 9,7%. Das Gemisch ist nach 180-tägiger Lagerung im geschlossenen Gebinde unverändert.

Beispiel 35

Zu 400 Teilen eines NCO-Prepolymeren aus 3 Mol 2,4-Diisocyanatotoluol und 1 Mol Trimethylolpropan (75%ige Lösung in Ethylacetat, NCO-Gehalt der Lösung = 13%), gibt man 5 Teile eines Polyetherpolyols der OH-Zahl 490, hergestellt durch Propoxylierung von Ethylendiamin, gelöst in 5 Teilen Ethylacetat und rührt ca. 1 Std., bis ein NCO-Gehalt von 11,5% erreicht ist. Der so erhaltene Ansatz wird halbiert und eine Hälfte zusätzlich mit 4,3 g Tosylisocyanat versetzt. Die Lagerstabilität dieser beiden Mischungen im geschlossenen Gebinde beträgt 9 Tage für die unbehandelte Vergleichshälfte und 122 Tage für die mit Tosylisocyanat versetzte erfindungsgemässe Probe (bis zur vollständigen Vergelung).

**Patentansprüche**

1. Reversibel blockierte Katalysatoren für die Isocyanat-Additionsreaktion enthaltende Polyisocyanat-Zubereitungen, dadurch gekennzeichnet, dass sie aus

a) mindestens einem organischen Polyisocyanat,
b) mindestens einem, in der Polyisocyanat-Zubereitung gelöst oder dispergiert vorliegenden Anlagerungsprodukt eines Sulfonylisocyanats an ein tert. Amin und/oder an einen Katalysator mit Zinn(II)- bzw. Zinn(IV)-carboxylat-Struktur als reversibel blockiertem Katalysator, sowie gegebenenfalls
c) aus der Polyurethanchemie an sich bekannten Hilfs- und Zusatzmitteln

bestehen.

2. Polyisocyanat-Zubereitungen gemäss Anspruch 1, gekennzeichnet durch einen Gehalt von 0,01 bis 10 Gew.-% der Komponente b), bezogen auf die Komponente a).

3. Polyisocyanat-Zubereitungen gemäss Anspruch 1 und 2, dadurch gekennzeichnet, dass die Polyisocyanat-Komponente a) ein endständige Isocyanatgruppen aufweisendes Prepolymer des (mittleren) Molekulargewichts von 400 bis 10 000 mit einem NCO-Gehalt von 2,5 bis 25 Gew.-% darstellt.

4. Polyisocyanat-Zubereitungen gemäss Anspruch 1 bis 3, dadurch gekennzeichnet, dass das Sulfonylisocyanat der Komponente b) eine Verbindung mit mindestens einer aromatisch gebundenen Isocyanato-sulfonyl-Gruppe darstellt.

5. Verfahren zur Herstellung von Polyisocyanat-Zubereitungen der Ansprüche 1 bis 4, dadurch gekennzeichnet, dass man bei 0 bis 80 °C (i) mindestens ein mindestens eine tert. Aminogruppe aufweisendes Amin und/oder (ii) mindestens eine Verbindung mit Zinn(II)- bzw. Zinn(IV)-carboxylat-Struktur mit einer, bezogen auf die tert. Aminogruppen bzw. die Carboxylatanionen einerseits und die Isocyanato-sulfonyl-Gruppen des Sulfonylisocyanats andererseits, mindestens äquimolaren Menge eines Sulfonylisocyanats zu einem Anlagerungsprodukt b) umsetzt, wobei die Umsetzung entweder in der Gesamtmenge der gegebenenfalls in einem Hilfslösungsmittel gelösten Polyisocyanat-Komponente a) als Reaktionsmedium oder wobei die Umsetzung in Abwesenheit oder nur in einem Teil der gegebenenfalls in einem Hilfslösungsmittel gelösten Polyisocyanat-Komponente a) gegebenenfalls unter Mitverwendung eines Hilfslösungsmittels unter anschliessender Durchmischung mit der Gesamtmenge bzw. der Restmenge der gegebenenfalls in einem Hilfslösungsmittel gelösten Polyisocyanat-Komponente a) erfolgt, und wobei gegebenenfalls (weitere) Hilfs- und Zusatzmittel c) der Komponente a) vor der Herstellung der Mischung mit der Komponente b) oder der Mischung aus a) und b) hinzugefügt werden.

6. Verwendung der Polyisocyanat-Zubereitungen gemäss Anspruch 1 bis 4 als Reaktionspartner für Verbindungen mit gegenüber Isocyanatgruppen reaktionsfähigen Wasserstoffatomen bei der Herstellung von Polyurethan-Kunststoffen.

7. Verwendung der Polyisocyanat-Zubereitungen gemäss Ansprüchen 1 bis 4 als Reaktionspartner für organische Polyhydroxylverbindungen in Zweikomponenten-Beschichtungs- und Klebemitteln.

8. Verwendung der Polyisocyanat-Zubereitungen gemäss Anspruch 3 als bei Abwesenheit von Feuchtigkeit lagerstabile und unter dem Einfluss von Feuchtigkeit aushärtbare Beschichtungs- und/oder Klebemittel für die Beschichtung und/oder Verklebung beliebiger Substrate.

9. Polyurethankatalysatoren, dadurch gekennzeichnet, dass sie Anlagerungsprodukte eines Sulfonylisocyanats an Katalysatoren mit Zinn(II)- oder Zinn(IV)-Carboxylat-Struktur in einem Mol-Verhältnis von Isocyanato-sulfonyl-Gruppen zu Carboxylatanionen von 1:1 darstellen.

**Claims**

1. Polyisocanate preparations containing reversibly blocked catalysts for the isocyanate addition reaction, characterized in that they consist of

a) at least one organic polyisocyanate,

b) at least one adduct – dissolved or dispersed in the polyisocyanate preparation – of a sulfonyl isocyanate with a tertiary amine and/or with a catalyst having a tin(II) or tin(IV) carboxylate structure as the reversibly blocked catalyst and, optionally

c) auxiliaries and additives known per se from polyurethane chemistry.

2. Polyisocyanate preparations as claimed in claim 1, characterized by a content of 0.01 to 10% by weight of component b), based on component a).

3. Polyisocyanate preparations as claimed in claims 1 and 2, characterized in that the polyisocyanate component a) is an isocyanate-terminated prepolymer having an (average) molecular weight of 400 to 10 000 and an NCO content of 2.5 to 25% by weight.

4. Polyisocyanate preparations as claimed in claims 1 to 3, characterized in that the sulfonyl isocyanate of component b) is a compound containing at least one aromatically bound isocyanatosulfonyl group.

5. A process for the production of the polyisocyanate preparations claimed in claims 1 to 4, characterized in that (i) at least one amine containing at least one tertiary amino group and(or (ii) at least one compound having a tin(II) or tin(IV) carboxylate structure is reacted at 0 to 80 °C with an at least equimolar quantity of a sulfonyl isocyanate, based on the tertiary amino groups or the carboxylate anions on the one hand and the isocyanatosulfonyl goups of the sulfonyl isocyanate on the other hand, to form an adduct b), the reaction being carried out either in the total quantity of polyisocyanate component a) optionally dissolved in an auxiliary solvent as reaction medium or in the absence of or in only part of polyisocyanate component a) optionally dissolved in an auxiliary solvent, optionally using an auxiliary solvent, followed by admixture with the total quantity or with the remainder of polyisocyanate component a) optionally dissolved in an auxiliary solvent, and (further) auxiliaries and additives c) optionally being added to component a) before preparation of the mixture with component b) or to the mixture of a) and b).

6. The use of the polyisocyanate preparations claimed in claims 1 to 4 as reactant for compounds containing isocyanate-reactive hydrogen atoms in the production of polyurethane plastics.

7. The use of the polyisocyanate preparations claimed in claims 1 to 4 as reactant for organic polyhydroxyl compounds in two-component coating compositions and adhesives.

8. The use of the polyisocyanate preparations claimed in claims 3 as coating compositions and/or adhesives storable in the absence of moisture and hardening under the effect of moisture for the coating and/or bonding of substrates.

9. Polyurethane catalysts, characterized in that they are adducts of a sulfonyl isocyanate with catalysts having a tin(II) or tin(IV) carboxylate structure in a molar ratio of isocyanatosulfonyl groups to carboxylate anions of 1:1.

**Revendications**

1. Préparations à base de polyisocanates contenant des catalyseurs bloqués de façon réversible pour la réaction d'addition d'isocyanate, caractérisées en ce qu'elles sont constituées

a) d'au moins un polyisocyanate organique,

b) d'au moins un produit d'addition, présent à l'état dissous ou dispersé dans la préparation de polyisocyanate, d'un sulfonyl-isocyanate sur une amine tertiaire et/ou sur un catalyseur à structure de carboxylate d'étain (II) ou d'étain (IV) en tant que catalyseur bloqué de façon réversible, ainsi que, le cas échéant,

c) d'adjuvants et d'additifs connus dans la chimie des polyuréthannes.

2. Préparations à base de polyisocyanates suivant la revendication 1, caractérisées par une teneur de 0,01 à 10% en poids de composant b), par rapport au composant a).

3. Préparations à base de polyisocyanates suivant les revendications 1 et 2, caractérisées en ce que le composant polyisocyanate a) représente un prépolymère porteur de groupes isocyanato terminaux de poids moléculaire (moyen) allant de 400 à 10 000 avec une teneur en NCO de 2,5 à 25% en poids.

4. Préparations à base de polyisocyanates suivant les revendications 1 à 3, caractérisées en ce que le sulfonyl-isocyanate du composant b) représente un composé portant au moins un groupe isocyanatosulfonyle en liaison aromatique.

5. Procédé pour l'obtention de préparations à base de polyisocyanates suivant les revendications 1 à 4, caractérisé en ce qu'on fait réagir à 0–80 °C (i) au moins une amine portant au moins un groupe amino tertiaire et/ou (ii) au moins un composé à structure de carboxylate d'étain (II) ou d'étain (IV) avec une quantité au moins équivalente, par rapport aux troupes amino tertiaires et aux anions carboxylate d'une part et aux groupes isocyanatosulfonyle du sulfonylisocyanate d'autre part, d'un sulfonylisocyanate pour former un produit d'addition b), en conduisant la réaction dans la quantité totale du composant polyisocyanate a) dissous le cas échéant dans un solvant auxiliaire, comme milieu de réaction ou en conduisant la réaction en l'absence, ou dans une partie seulement, du composant polyisocynate a) éventuellement dissous dans un solvant auxiliare, avec éventuellement l'utilisation d'un solvant auxiliaire puis mélange avec la quantité totale ou la quantité résiduelle du composant polyisocyanate a) dissous éventuellement dans un solvant auxiliaire, et on ajoute éventuellement des (ou d'autres) substances auxiliaires et additifs c) au composant a) avant la préparation du mélange avec le composant b) ou du mélange de a) et b).

6. Utilisation des préparations à base de polyisocyanates suivant les revendications 1 à 4 comme partenaires réactionnels pour des composés porteurs d'atomes d'hydrogène aptes à réagir vis-à-vis de groupes isocyanato dans la préparation de matières plastiques du type polyuréthanne.

7. Utilisation des préparations à base de polyisocyanates selon les revendications 1 à 4 comme partenaires réactionnels pour des composés polyhydroxyliques organiques dans des compositions de revêtement et des adhésifs à deux composants.

8. Utilisation des préparations à base de polyisocyanates suivant la revendication 3, comme compositions de revêtement et/ou adhésifs stables à l'entreposage à l'abri de l'humidité et pouvant durcir sous l'influence de l'humidité, pour le revêtement et/ou le collage de substrats quelconques.

9. Catalyseurs pour polyuréthannes, caractérisés en ce qu'ils constituent des produits d'addition d'un sulfonyl-isocyanate sur des catalyseurs à structure de carboxylate d'étain (II) ou d'étain (IV) dans un rapport molaire des groupes isocyanatosulfonyle aux anions carboxylate de 1:1.